# EUROPEAN PATENT SPECIFICATION

(11) **EP 1 317 099 B1**
(45) Date of publication and mention of the grant of the patent: **24.12.2008**
(21) Application number: 02026251.5
(22) Date of filing: 26.11.2002
(51) Int. Cl.: H04L 12/28

(54) **Appliance control system and method using mobile communications terminal, and home gateway**
System und Verfahren zur Steuerung eines Haushaltgerätes, mit einem Kommunikationsmobilendgerätes und einer Übergangseinheit für ein Haus
Système et procédé de commande d'appareil utilisant un terminal mobile pour les communications et une passerelle pour le domicile

(30) Priority: 29.11.2001 JP 2001364535
(43) Date of publication of application: 04.06.2003
(73) Proprietor: Panasonic Corporation, Kadoma-shi Osaka 571-8501 (JP)
(72) Inventor: Sumita, Tetsuji, Hiroshima-shi, Hiroshima-ken 733-0821 (JP); Takahashi, Masahiko, Sagamihara-shi, Kanagawa-ken 229-0035 (JP)
(74) Representative: Gassner, Wolfgang

(56) References cited:
- WO-A-00/76130
- WO-A-01/86879
- WO-A-98/53581
- PATENT ABSTRACTS OF JAPAN vol. 1998, no. 10, 31 August 1998 (1998-08-31) & JP 10 124418 A (NIPPON TELEGR & TELEPH CORP <NTT>), 15 May 1998 (1998-05-15)

## Description

### BACKGROUND OF THE INVENTION

### Field of the Invention

The present invention relates to appliance control systems and methods using mobile communications terminals, and home gateways and, more specifically, to a system and method for remotely controlling a plurality of electrical home appliances (typified by electrical appliances often found in homes) using a mobile communications terminal, and a home gateway incorporated in the system.

### Description of the Background Art

There have been recently developed various types of technologies for remotely controlling, away from home, electrical home appliances using mobile communications terminals, e.g., mobile phones, via public networks and the Internet. Such remote control technologies are exemplified by a capability for remotely programming VCRs (videocassette recorders), or a capability for remotely operating a plurality of electrical home appliances.

With such technologies, for controlling any target electrical home appliance, an operation instruction signal coming from a mobile communications terminal is converted into a format applicable to any needed appliance control signal. Here, the appliance control signal includes a command or code for putting the target electrical home appliance into actual operation, e.g., turning power ON or OFF, starting recording, and the like. Such format conversion is carried out in a specific device (corresponding to a control section) additionally placed in the house.

With the above technologies, however, converting the operation instruction signal into a predetermined format is a problem. That is, to remotely control a plurality of electrical home appliances, the specific device provided for format conversion needs to previously carry information, e.g., appliance control program, needed to define an appliance control signal for each of the electrical home appliances. The issue here is that the electrical home appliances vary in type and manufacturer. Thus, the specific device needs to carry every appliance control program for every type and manufacturer of the existing electrical home appliances, resultantly causing a required storage region in the specific device to be huge. Moreover, the appliance control programs to be loaded in the specific device are limited to those relevant to electrical home appliances available on the market at the time of manufacturing the specific device. Thus, there is no way to keep track of new products coming later on the market.

WO 00/76130 A1 describes a method for remotely controlling an electrical home appliance using a communications terminal. The communications terminal is connected via the internet to a home access device which is connected via a home network with the electrical home appliance. The home access device comprises a database in which parameters for controlling the home appliance are stored.

### SUMMARY OF THE INVENTION

Therefore, an object of the present invention is to provide an appliance control system and method for enabling remote operation with respect to electrical home appliances, no matter which appliance a user currently has and/or will have, using a mobile communications terminal without unnecessary storage of appliance control programs, and a home gateway.

This object is solved by the features of claims 1 and 8. Embodiments of the invention are described by the features of claims 2 to 7 and 9 to 14.

A first aspect of the present invention is directed to an appliance control system in which an arbitrary electrical home appliance in a predetermined local area can be remotely controlled using a mobile communications terminal. Such an appliance control system includes: a database for storing at least a piece of appliance control information needed to define a signal for directly controlling any one of various types of electrical home appliances; at least one electrical home appliance operable to retain, as storage location information, information about access to the database that stores the own appliance control information of the electrical home appliance; a home gateway connecting with the electrical home appliance via a local area network, and operable to collectively control the storage location information retained by the electrical home appliance connected thereto; a mobile communications terminal operable to remotely control the electrical home appliance based on the appliance control information stored in the database using the storage location information collectively controlled by the home gateway; and a network connecting the database, the home gateway, and the mobile communications terminal.

As described above, in the first aspect, appliance control information (preferably, appliance control programs) needed for operating various types of electrical home appliances is stored on a database for collective control on a network. In a house, the information about the storage location of the appliance control information is collectively controlled by a home gateway together with various types of information about the electrical home appliances. In such a structure, by referring to the home gateway, a mobile communications terminal becomes able to acquire from the database predetermined information about any electrical home appliance which a user desired to operate, and provides the target electrical home appliance with any desired operation instruction. Therefore, for the mobile communications terminal and the home gateway, there is no need to carry unnecessary appliance control information. For the users, without going through information update or appliance type change of their mobile communications terminals, it becomes possible to remotely control every electrical home appliance, no matter which appliance the users currently have and/or will have.

In a case where the database stores a single piece of the appliance control information for each of the electrical home appliances, and the storage location information uniquely specifies the appliance control information, it is preferable to execute the following processes. That is, in response to a request from the mobile communications terminal for remotely controlling the electrical home appliance, the home gateway transmits the storage location information of the electrical home appliance to the mobile communications terminal. Based on the storage location information received from the home gateway, the mobile communications terminal acquires, from the database, the appliance control information corresponding to the electrical home appliance requested for remote control. The mobile communications terminal then interprets and executes thus acquired appliance control information, and transmits a control signal corresponding to any desired operation details to the home gateway. The home gateway then provides the received control signal to the electrical home appliance requested for remote control.

Such a mobile communications terminal can provide any desired operation instruction to the target electrical home appliance by interpreting and executing the corresponding appliance control information acquired from the database with reference to the home gateway, which is collectively controlling the storage location information.

Further, in a case where the database stores a plurality of the appliance control information for each of the electrical home appliances, and the storage location information specifies two or more of the plurality of appliance control information, the following processes are preferably executed. That is, in response to a request from the mobile communications terminal for remotely controlling the electrical home appliance, the home gateway transmits the storage location information of the electrical home appliance to the mobile communications terminal. Based on the storage location information received from the home gateway, the mobile communications terminal selectively acquires, from the database, any desired one of the appliance control information from among the two or more of the plurality of the appliance control information corresponding to the electrical home appliance requested for remote control. Then, the mobile communications terminal interprets and executes thus acquired appliance control information, and transmits a control signal corresponding to any desired operation details to the home gateway. The home gateway then provides the received control signal to the electrical home appliance requested for remote control.

When a plurality of appliance control information are corresponding to one electrical home appliance, the mobile communications terminal in the above structure can provide any desired operation instruction to the target electrical home appliance by interpreting and executing the corresponding appliance control information selectively and solely acquired from the database with reference to the home gateway, which is collectively controlling the storage location information.

Alternatively, in a case where the database stores a single piece of the appliance control information for each of the electrical home appliances, and the storage location information uniquely specifies the appliance control information, the following processes are preferably executed. In detail, after the home gate way connects with the electrical home appliance via the local area network, the home gateway first acquires in advance from the database the appliance control information specified by the storage location information of the connected electrical home appliance. In response to a request from the mobile communications terminal for remotely controlling the electrical home appliance, the home gateway transmits an operation screen based on the appliance control information to the mobile communications terminal. Using the operation screen received from the home gateway, the mobile communications terminal transmits an instruction to the home gateway including any desired operation details of the electrical home appliance requested for remote control. The home gateway then interprets and executes the appliance control information in accordance with the received instruction, and provides a control signal corresponding to the desired operation details to the electrical home appliance requested for remote control.

In the above manner, the home gateway acquires and retains the appliance control programs, and thus the storage resource of the mobile communications terminal can be effectively utilized. Moreover, a series of control-related instructions previously provided from the mobile communications terminal to the home gateway eliminate the need for a communications link therebetween at the time of actual control, successfully enabling the home gateway to solely control the electrical home appliances.

Preferably, the home gateway manages the storage location information together with an appliance name predetermined for the electrical home appliance, and in response to the request, transmits the appliance name together with the storage location information to the mobile communications terminal. By referring to the appliance name received from the home gateway, the mobile communications terminal can select the electrical home appliance requested for remote control.

With such a structure, the home gateway notifies the mobile communications terminal about an appliance name and storage location information of every electrical home appliance connected to the household network. This helps users select any electrical home appliance which the users desire to operate.

Still preferably, the home gateway further manages an appliance condition relating to an operation and a setting of the electrical home appliance, and in response to the request, transmits the appliance condition together with the storage location information and the appliance name to the mobile communications terminal. By referring to the appliance condition received from the home gateway, the mobile communications terminal can determine whether the operation details are effective.

With such a structure, the home gateway notifies the appliance condition of the electrical home appliance to the mobile communications terminal. Accordingly, any impossible operations or unnecessary operations can be avoided in advance, successfully improving the usability for the users.

More preferably, the storage location information collectively controlled by the home gateway may be arbitrarily changed.

As such, if the users are allowed to arbitrarily change the storage location information of the home gateway, some other appliance control information needed to control the electrical home appliances can be used.

A second aspect of the present invention is directed to an appliance control method for remotely controlling an arbitrary electrical home appliance in a predetermined local area using a mobile communications terminal in a system wherein a network connects a database for storing at least a piece of appliance control information needed to define a signal for directly controlling any one of various types of electrical home; a home gateway connecting with at least one of the electrical home appliances operable to retain, as storage location information, information about access to the database that stores the own appliance control information of the electrical home appliance via a local area network; and the mobile communications terminal. Under the appliance control method, after the home gateway connects with the electrical home appliance via the local network, the home gateway acquires and manages the storage location information retained by the electrical home appliance connected thereto, and using the storage location information managed by the home gateway, the mobile communications terminal remotely controls the electrical home appliance based on the appliance control information stored in the database.

In a case where the database stores a single piece of said appliance control information for each of the electrical home appliances, and the storage location information uniquely specifies, the appliance control information, it is preferable to include the following steps. That is, a step of transmitting, by the home gateway, the storage location information of the electrical home appliance to the mobile communications terminal in response to a request from the mobile communications terminal for remotely controlling the electrical home appliance; a step of acquiring from the database, by the mobile communications terminal, the appliance control information corresponding to the electrical home appliance requested for remote control based on the storage location information received from the home gateway; a step of interpreting and executing, by the mobile communications terminal, the appliance control information acquired from the database, and transmitting a control signal corresponding to any desired operation details to the home gateway; and a step of providing, by the home gateway, the control signal received from the mobile communications terminal to the electrical home appliance requested for remote control.

Further, in a case where the database stores a plurality of the appliance control information for each of the electrical home appliances, and the storage location information specifies two or more of the plurality of appliance control information, the following steps are preferably included. That is, a step of transmitting, by the home gateway, the storage location information of the electrical home appliance to the mobile communications terminal in response to a request from the mobile communications terminal for remotely controlling the electrical home appliance; a step of selectively acquiring, by the mobile communications terminal, from the database, any desired one of the appliance control information from among the two or more of the plurality of the appliance control information corresponding to the electrical home appliance requested for remote control based on the storage location information provided from the home gateway; a step of interpreting and executing, by the mobile communications terminal, the appliance control information acquired from the database, and transmitting a control signal corresponding to any desired operation details to the home gateway; and a step of providing, by the home gateway, the control signal received from the mobile communications terminal to the electrical home appliance requested for remote control.

Alternatively, in a case where the database stores a single piece of appliance control information for each of the electrical home appliances, and the storage location information uniquely specifies the appliance control information, it is preferable to include the following steps. Specifically, a step of acquiring from the database in advance, by the home gateway, after the home gateway connects with the electrical home appliance via the local area network, the appliance control information specified by the storage location information of the connected electrical home appliance; a step of transmitting, by the home gateway, in response to a request from the mobile communications terminal for remotely controlling the electrical home appliance, an operation screen based on the appliance control information of the electrical home appliance to the mobile communications terminal; a step of transmitting an instruction to the home gateway, by the mobile communications terminal, including any desired operation details of the electrical home appliance requested for remote control using the operation screen received from the home gateway; and a step of interpreting and executing, by the home gateway, the appliance control information in accordance with the instruction received from the mobile communications terminal, and providing a control signal corresponding to the desired operation details to the electrical home appliance requested for remote control.

Herein, it is preferable to further include a step of transmitting, in response to the request, by the home gateway, an appliance name predetermined for the electrical home appliance and managed together with the storage location information to the mobile communications terminal together with the storage location information, and a step of selecting, by the mobile communications terminal, the electrical home appliance requested for remote control by referring to the appliance name received from the home gateway.

Further, it is preferable to further include a step of transmitting in response to the request, by the home gateway, an appliance condition further managed thereby relating to an operation and a setting of the electrical home appliance together with the storage location information and the appliance name, and a step of determining, by the mobile communications terminal, whether the operation details are effective by referring to the operation condition received from the home gateway.

More preferably, the storage location information managed by the home gateway may be arbitrarily changed.

A related embodiment is directed to a home gateway connecting, via a network, with a database for storing at least a piece of appliance control information needed to define a signal for directly controlling any one of various types of electrical home appliances; and a mobile communications terminal operable to remotely control the electrical home appliance based on the appliance control information stored in the database. To the home gateway, at least one of the electrical home appliances operable to retain, as storage location information, information about access to the database that stores the own appliance control information of the electrical home appliance is connected via a local area network, and the storage location information retained by the connected electrical home appliance is acquired and managed.

Herein, preferably, in response to a request from the mobile communications terminal for remotely controlling the electrical home appliance, the storage location information of the electrical home appliance is transmitted to the mobile communications terminal, and in response to a control signal corresponding to any desired operation details received from the mobile communications terminal, the control signal is provided to the electrical home appliance requested for remote control.

Still preferably, after the home gateway connects with the electrical home appliance via the local area network, the appliance control information specified by the storage location information of the electrical home appliance is acquired in advance from the database. In response to a request from the mobile communications terminal for remotely controlling the electrical home appliance, an operation screen based on the appliance control information of the electrical home appliance is transmitted to the mobile communications terminal, and in response to any desired operation instruction received from the mobile communications terminal, a control signal corresponding to the operation instruction is generated by interpreting and executing the previously acquired appliance control information, and the control signal is provided to the electrical home appliance requested for remote control.

Preferably, the storage location information is managed together with an appliance name predetermined for the electrical home appliance, and in response to the request, the appliance name is transmitted to the mobile communications terminal together with the storage location information.

Still preferably, an appliance condition relating to an operation and a setting of the electrical home appliance is further managed, and the appliance condition is transmitted to the mobile communications terminal together with the storage location information and the appliance name in response to the request.

Still preferably, the storage location information to be collectively controlled by the home gateway may be arbitrarily changed.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic diagram showing the structure of an appliance control system according to first to third embodiments of the present invention;
FIG. 2 is a diagram specifically showing an exemplary structure of a mobile communications terminal 2 of the first and second embodiments;
FIG. 3 is a diagram specifically showing an exemplary structure of a home gateway 6 of the first and second embodiments;
FIG. 4 is a diagram specifically showing an exemplary structure of an electrical home appliance 4 of the first to fourth embodiments;
FIG. 5 is a diagram showing exemplary data previously stored in a database 71 of the first embodiment;
FIG. 6 is a flowchart of a process for registering, to the home gateway 6, electrical home appliance information about the electrical home appliance 4 of the first embodiment;
FIG. 7 shows an exemplary information management table provided in an electrical home appliance information management section 63 of the first embodiment;
FIG. 8 is a diagram showing an exemplary sequence of the process for registering the electrical home appliance information of the first embodiment;
FIGS. 9 and 10 are both flowcharts of a process for remotely controlling the electrical home appliance 4 from the mobile communications terminal 2 of the first embodiment;
FIG. 11 is a diagram showing an exemplary sequence of the process for remotely controlling the electrical home appliance 4 of the first embodiment;
FIG. 12 is a diagram showing exemplary screen displays of the mobile communications terminal 2 based on the electrical home appliance information about an air conditioner in the first embodiment;
FIG. 13 is a diagram showing exemplary screen displays of the mobile communications terminal 2 based on the electrical home appliance information about a videocassette recorder in the first embodiment;
FIG. 14 is a diagram showing exemplary data previously stored in the database 71 of the second embodiment;
FIG. 15 is a flowchart of a process for registering, to the home gateway 6, the electrical home appliance information about the electrical home appliance 4 of the second embodiment;
FIG. 16 shows an exemplary information management table provided in the electrical home appliance information management section 63 of the second embodiment;
FIG. 17 partially shows a flowchart of a process for remotely controlling the electrical home appliance 4 from the mobile communications terminal 2 of the second embodiment;
FIG. 18 is a diagram showing an exemplary screen display of the mobile communications terminal 2 on which a program supplier list of the second embodiment is displayed;
FIG. 19 is a diagram showing an exemplary sequence of the process for remotely controlling the electrical home appliance 4 of the second embodiment;
FIG. 20 is a diagram specifically showing an exemplary structure of the mobile communications terminal 2 of the third embodiment;
FIG. 21 is a diagram specifically showing an exemplary structure of the home gateway 6 of the third embodiment;
FIG. 22 is a diagram showing an exemplary information management table provided in the electrical home appliance information management section 63 of the third embodiment;
FIG. 23 is a flowchart of a process for registering, to the home gateway 6, the electrical home appliance information about the electrical home appliance 4 of the third embodiment;
FIG. 24 is a diagram showing an exemplary sequence of the process for registering the electrical home appliance information of the third embodiment;
FIGS. 25 and 26 are both flowcharts of a process for remotely controlling the electrical home appliance 4 from the mobile communications terminal 2 of the third embodiment;
FIG. 27 is a diagram showing an exemplary sequence of the process for remotely controlling the electrical home appliance 4 of the third embodiment;
FIG. 28 is a schematic diagram showing the structure of an appliance control system according to the fourth embodiment of the present invention;
FIG. 29 is a diagram specifically showing an exemplary structure of the mobile communications terminal 2 of the fourth embodiment;
FIG. 30 shows an exemplary information management table provided in the electrical home appliance information management section 63 of the fourth embodiment;
FIG. 31 is a flowchart of a process for registering, to the mobile communications terminal 2, the electrical home appliance information about the electrical home appliance 4 of the fourth embodiment;
FIG. 32 is a flowchart of a process for remotely controlling the electrical home appliance 4 from the mobile communications terminal 2 of the fourth embodiment;
FIG. 33 is a diagram showing an exemplary sequence of the process for registering the electrical home appliance information of the fourth embodiment; and
FIG. 34 is a diagram showing an exemplary sequence of the process for remotely controlling the electrical home appliance 4 of the fourth embodiment.

### DESCRIPTION OF THE PREFERRED EMBODIMENTS

### (First Embodiment)

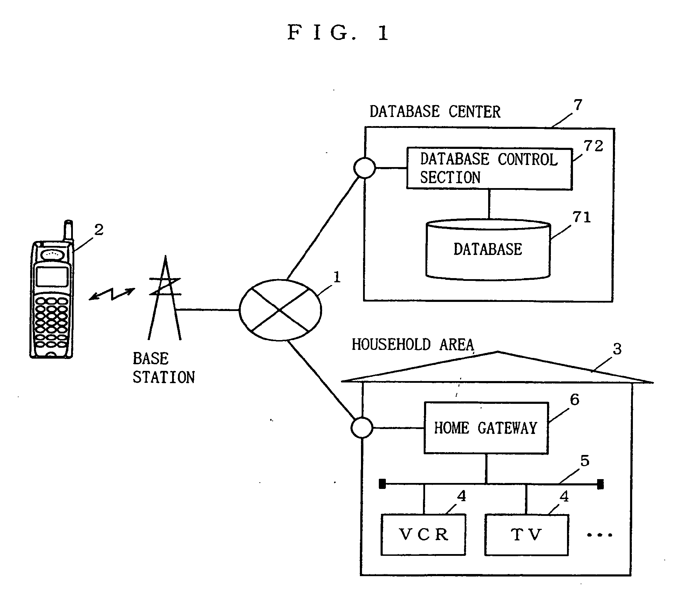

FIG. 1 is a schematic diagram showing the structure of an appliance control system according to a first embodiment of the present invention. Referring to FIG. 1, in the appliance control system of the first embodiment, a mobile communications terminal 2 is connected to both a household area 3 and a database center 7 via a network 1 such as a public network or the Internet. Here, the mobile communications terminal 2 gives instructions for operation of electrical home appliances located in the household area 3. Exemplified below is a case where the mobile communications terminal 2 is a mobile phone, and thus FIG. 1 shows the structure in which a wireless base station is placed between the network 1 and the mobile communications terminal 2. Clearly, such a structure is not restrictive, and both may be directly connected to each other via a cable. Similarly, electrical home appliances 4 may be located not only in houses but also in any local area, e.g., schools, hospitals.

In the household area 3, a household network 5 is used to connect a home gateway 6 and the electrical home appliances 4, which are to be remotely controlled. The home gateway 6 is capable of controlling the electrical home appliances 4 and collectively managing information thereabout, and functions as an interface with the network 1. The database center 7 includes a database 71 and a database control section 72. Herein, the database 71 carries appliance control programs each corresponding to the electrical home appliances which vary in manufacturer and type. The database control section 72 interfaces between the network 1 and the database 71. Note here that, the database center is not limited to one, and may be provided for every type and manufacturer of the electrical home appliances.

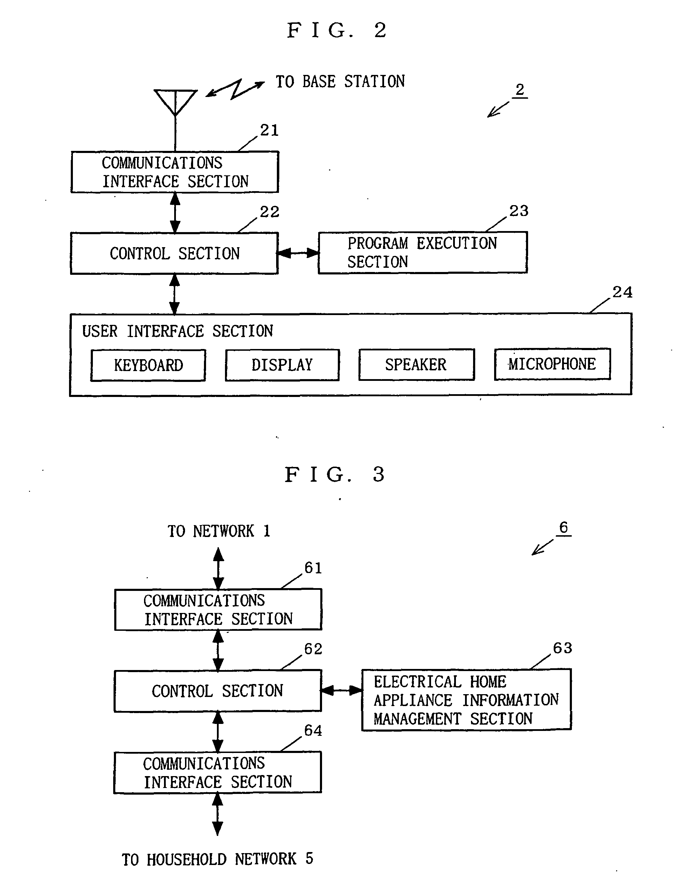

Additionally referring to FIGS. 2 to 4, described are the structures of the mobile communications terminal 2, the home gateway 6, and the electrical home appliances 4.

FIG. 2 shows a specific exemplary structure of the mobile communications terminal 2, which is assumed to be a mobile phone. In FIG. 2, the mobile communications terminal 2 includes a communications interface section 21, a control section 22, a program execution section 23, and a user interface section 24. The communications interface section 21 performs signal transmission and reception between the network 1 and the control section 22. The control section 22 is composed of a CPU, memory, and the like, and is in charge of entirely controlling the mobile communications terminal 2, e.g., acquiring any appliance control program needed for remote control, operating the corresponding electrical home appliance in response to an appliance control signal. The program execution section 23 executes the appliance control program provided from the database center 7, and outputs the appliance control signal if required. The user interface section 24 is composed of a keyboard, a display, a speaker, and a microphone, for example, and performs input/output of information needed for appliance control from/to a user.

FIG. 3 shows a specific exemplary structure of the home gateway 6. In FIG. 3, the home gateway 6 includes a communications interface section 61, a control section 62, an electrical home appliance information management section 63, and a communications interface section 64. The communications interface section 61 is an interface to the network 1, and the communications interface section 64 is an interface to the household network 5. The communications interface section 61 performs signal transmission and reception between the network 1 and the control section 62. The control section 62 is composed of a CPU, memory, and the like, and in charge of entirely controlling the home gateway 6, e.g., generating the electrical home appliance information, providing information to the mobile communications terminal 2. The electrical home appliance information management section 63 keeps track of various information about the electrical home appliances 4 connected to the household network 5. The communications interface section 64 performs signal transmission and reception between the household network 5 and the control section 62.

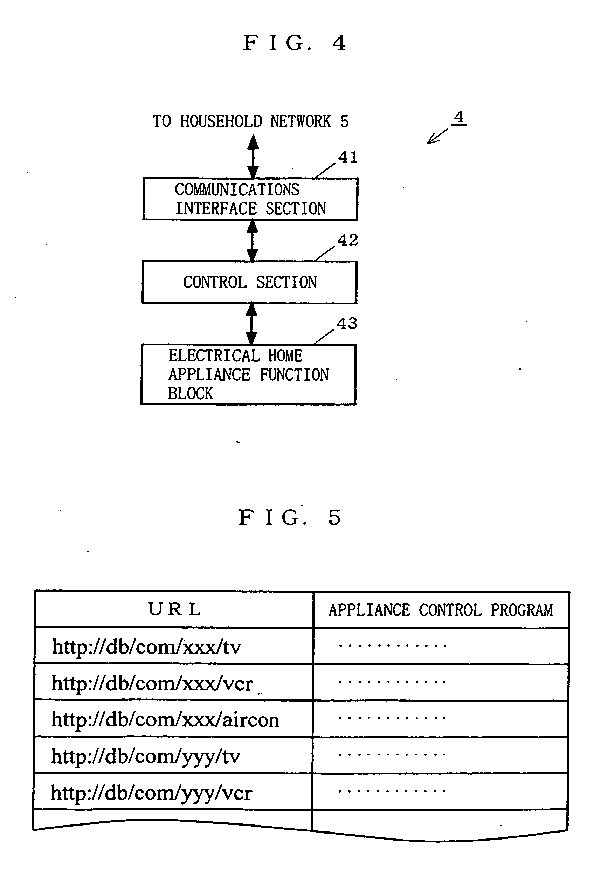

FIG. 4 shows a specific exemplary structure of the electrical home appliance 4. The electrical home appliance 4 in FIG. 4 includes a communications interface section 41, a control section 42, and an electrical home appliance function block 43. The communications interface section 41 performs signal transmission and reception between the household network 5 and the control section 42. The control section 42 is composed of a CPU, memory, and the like, and controls initial setting at the time of connection to the household network 5 and controls the electrical home appliance function block 43 based on the appliance control signal, for example. The electrical home appliance function block 43 is a component needed for activating functions inherent to the electrical home appliance 4, and every electrical home appliance 4 has its own electrical home appliance function block 43.

In the appliance control system structured as above according to the first embodiment, referring also to FIGS. 5 to 13, described next is an appliance control method for remotely controlling the electrical home appliances 4 using the mobile communications terminal 2.

First, described is a technique of registering, to the home gateway 6, the electrical home appliance information about the respective electrical home appliances 4 connected thereto via the household network 5.

In the appliance control system of the first embodiment, the database 71 managed by the database center 7 previously stores the appliance control programs for the electrical home appliances 4 which vary in manufacturer and type. FIG. 5 exemplarily shows such data. For the purpose of uniquely identifying the appliance control programs stored in the database 71, each of the appliance control programs of the electrical home appliances 4 is uniquely defined by storage location using URLs, for example. The database 71 is updated as appropriate, such as at the time of adding appliance control programs responding to any electrical home appliances 4 newly provided, or changing or deleting appliance control programs corresponding to any electrical home appliances 4 already existing. In the above, the appliance control programs are assumed as being the data previously stored in the database 71. This is not restrictive, rather any other data will suffice as long as it defines the appliance control signals of the electrical home appliances.

On the other hand, each of the electrical home appliances 4 previously stores and retains the storage location of the corresponding appliance control program in the database 71. Such a storage location is preferably stored and retained in the control section 42, but the electrical home appliance function block 43 also will suffice.

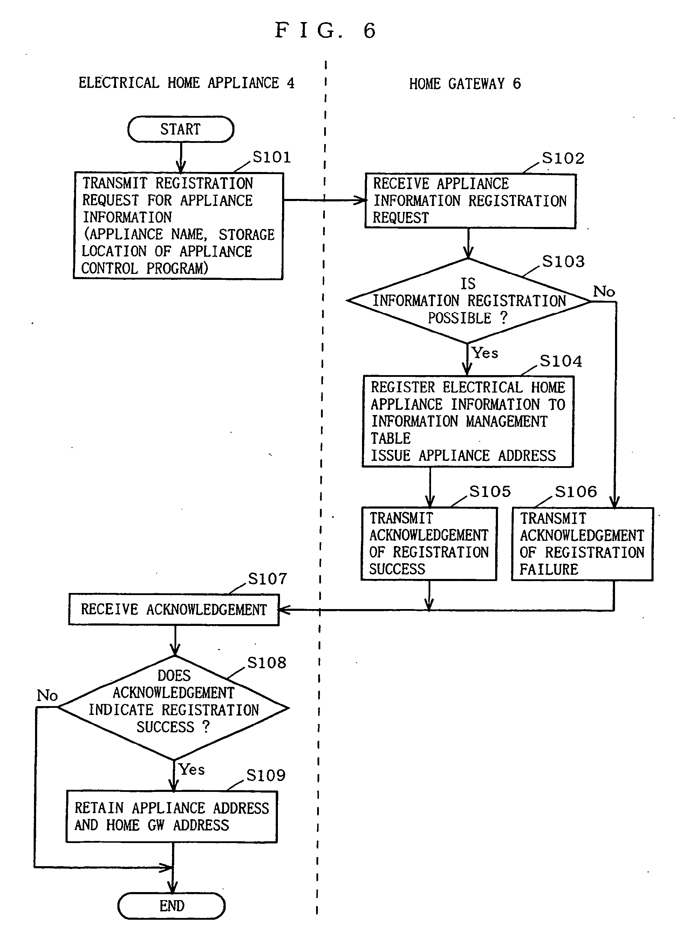

Referring to FIG. 6, in the household area 3, when any one electrical home appliance 4 is connected to the household network 5, the electrical home appliance 4 responsively transmits (broadcasts) a registration request to the home gateway 6 via the household network 5 (step S101). The request is the one asking for registering appliance information, which includes the appliance name of the electrical home appliance 4, the information inherent thereto, and the storage location of the appliance control program corresponding thereto.

In response to such an appliance information registration request provided by the electrical home appliance 4, the home gateway 6 determines whether or not any new electrical home appliance information can be registered (steps S102 and S103) . The determination factor at this time is whether a predetermined information management table has any free space enough for registering the electrical home appliance information. Here, the information management table is located in the electrical home appliance information management section 63.

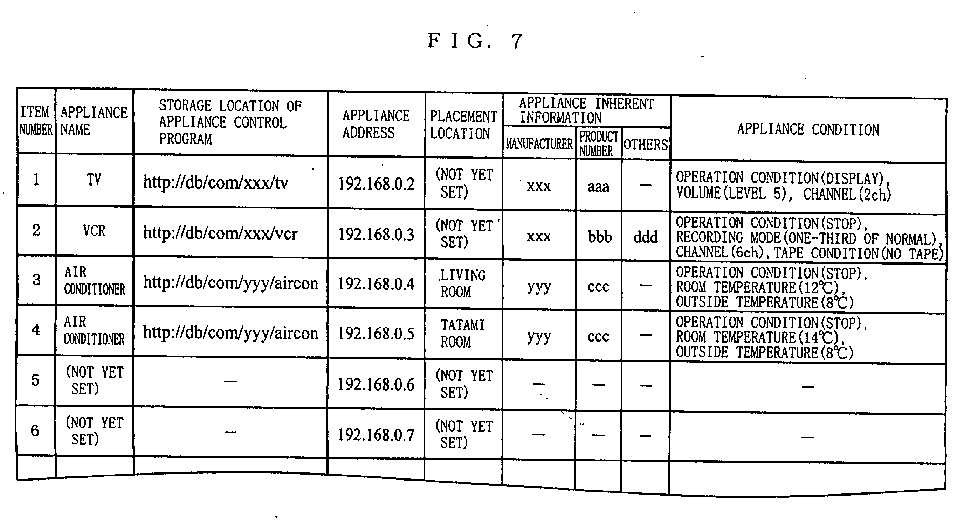

Now referring to FIG. 7, an example of the information management table is described. In FIG. 7, the table carries information items of appliance name, appliance control program' s storage location, appliance address, placement location, appliance inherent information, and appliance condition. The appliance name and the storage location of the appliance control program are information provided in responding to the appliance information registration request, which is described in the above. The application address is an inherent address provided for the purpose of uniquely identifying which electrical home appliance 4 is connected to the household network 5, and the home gateway 6 is in charge of issuing and managing thereof. The placement location indicates where the electrical home appliance 4 is placed. This information is provided to help the user distinguish the electrical home appliances if having several of those of the same type, e.g., air conditioners, and light fixtures. Using an information operation section (not shown) provided in the home gateway 6 allows the user to freely set the placement location after the electrical home appliance information is registered. Alternatively, to distinguish the electrical home appliances of the same type, the appliance name may be freely set by the user, e.g., S-VHS video and VHS video, or the home gateway 6 may automatically number the appliance names consecutively in order of registration, e.g., television-1, television-2. The appliance inherent information is set to the electrical home appliance 4 at the time of manufacturing, e.g., manufacturer, product number, and is transmitted in response to the above-described appliance information registration request. The appliance condition is information for notifying the operation condition or setting the condition of the electrical home appliance 4. The appliance condition is described later in more detail. If there is a need to use an appliance control program different from the one set at the time of registration, the information operation section may be used to change the storage location of the appliance control program.

In step S103, if the electrical home appliance information is determined as registerable, the home gateway 6 issues an appliance address on the household network 5 for the electrical home appliance 4 from which the registration request came, and registers the electrical home appliance information to the information management table (step S104). Thereafter, the home gateway 6 transmits to the electrical home appliance 4 an acknowledgement of registration success, including the appliance address and its own address on the household network 5 (home GW address) (step S105). On the other hand, if the electrical home appliance information is determined as not registerable in step S103, transmitted from the home gateway 6 to the electrical home appliance 4 is an acknowledgement of registration failure indicating that the electrical home appliance information failed to be registered (step S106).

After receiving the acknowledgement transmitted from the home gateway 6, the electrical home appliance 4 determines whether the acknowledgement indicates a registration success or failure (steps S107 and S108). If a registration success is determined in step S108, the electrical home appliance 4 stores and retains the transmitted appliance address and home GW address in the control section 42 or the electrical home appliance function block 43 (step S109). If a registration failure is determined in step S108, this registration requesting process is ended after the electrical home appliance 4 verifies that no connection has been established with the household network 5. If this is the case, the electrical home appliance 4 may transmit again the appliance information registration request to the home gateway 6, or may do so after a certain length of time.

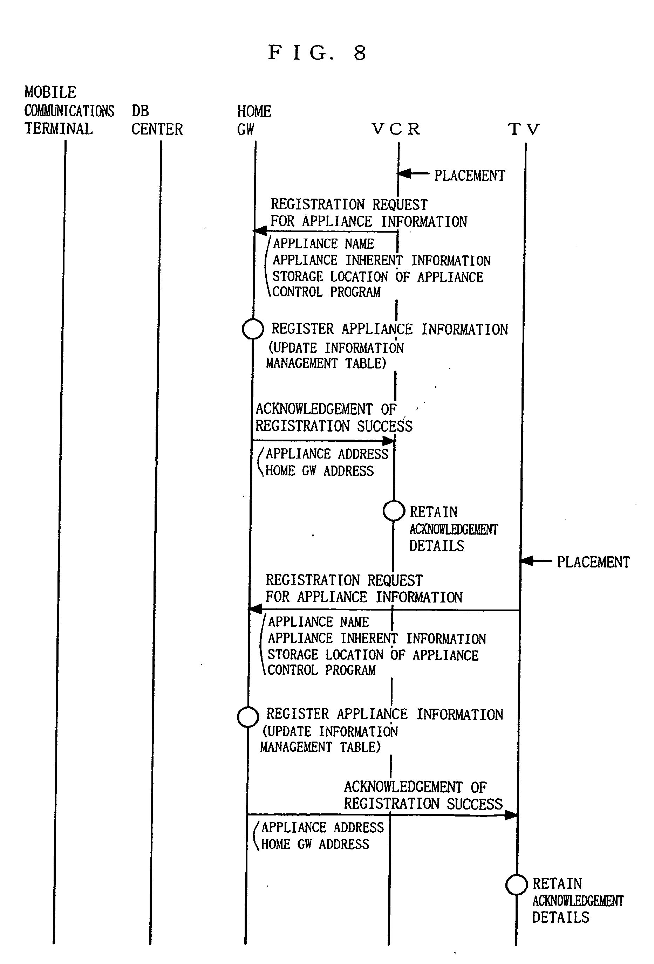

By going through such a process, the electrical home appliance 4 is connected to the household network 5, that is, the electrical home appliance information about the electrical home appliance 4 is fully registered to the home gateway 6 (electrical home appliance information management section 63). FIG. 8 shows an exemplary sequence in a case where the electrical home appliance information about a VCR or a television (TV) is registered.

Described now in detail is the item of appliance condition in the information management table (FIG. 7). In the present invention, for the purpose of avoiding such a problem that the validity (valid or invalid, needed or not needed) of the operation details instructed by the mobile communications terminal 2 is known only after the operation instruction is transmitted, this item is utilized to keep track of the appliance condition of the respective electrical home appliances 4 at regular intervals. The appliance condition of the electrical home appliances 4 kept track by the information management table is exemplified as follows.

Assuming that the electrical home appliance 4 is a videocassette recorder, the appliance condition includes power condition (ON or OFF), operation condition (e.g., stop, playback, record, fast-forward, rewind), selected channel, VCR programming (ON or OFF), recording mode (normal, one-third of normal, one-fifth of normal), and tape condition (inserted, not inserted, amount of tape remaining), for example. In the case of a television, the appliance condition includes power condition, selected channel, volume, and the like. With an air conditioner, included are power condition, operation condition (stop, air-conditioning, heating, dehumidification), and temperature (room, outside), for example. In the case of a microwave oven, the appliance condition includes power condition, operation condition (e.g., stop, heating operation, oven operation, toasting operation, operation level high or low), inner condition (food present or not), and the like. With a washing machine, the appliance condition includes power condition, operation condition (e.g., stop, wash, rinse, dry), and inner condition (clothes present or not), for example. In the case of light fixture, the appliance condition includes power condition, operation condition (full brightness, half brightness, small light on), and the like.

Such an appliance condition is acquired or updated automatically by the home gateway 6 after the electrical home appliance information is registered into the information management table. The timing for acquisition or update comes at regular intervals (e.g., every hour), or is predetermined such as when the electrical home appliance 4 is changed in condition, or when a request comes from the mobile communications terminal 2 for operation control. The mobile communications terminal 2 refers to the appliance condition to see in advance what instruction is valid in terms of operation details and what not.

Described next is a technique of remotely controlling the electrical home appliances 4 from the mobile communications terminal 2 using the electrical home appliance information registered in the information management table in the home gateway 6.

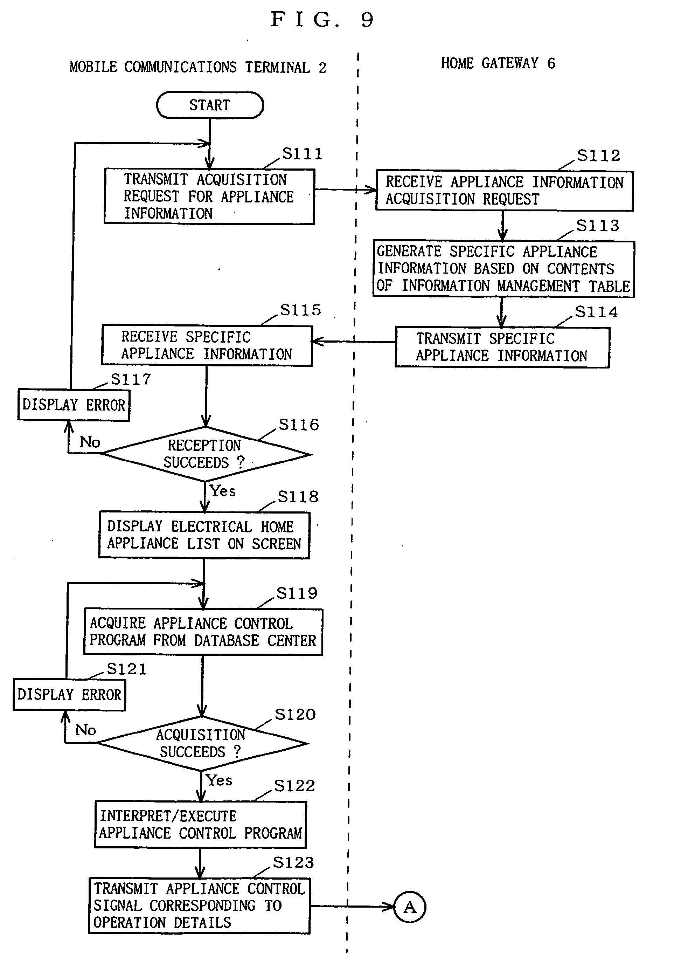

Referring to FIG. 9, assuming that a user's input is asking for operating the electrical home appliances 4, the mobile communications terminal 2 forwards, to the home gateway 6 via the network 1, an acquisition request for the appliance information (step S111).

After receiving such an appliance information acquisition request from the mobile communications terminal 2, the home gateway 6 refers to the contents of the information management table managed by the electrical home appliance information management section 63 for generating the electric home appliance information in a predetermined format (herein below, referred to as specific appliance information). The resulting information is forwarded to the mobile communications terminal 2 (steps S112 to S114). Note here that, the specific appliance information is set so as to include, at least, the appliance name and the storage location of the appliance control program.

In response to the specific appliance information forwarded by the home gateway 6, the mobile communications terminal 2 displays on its screen an electrical home appliance list in accordance therewith, and then waits for a user's instruction on which to select (steps S115 and S118). Here, if correct receipt of the specific appliance information fails, the mobile communications terminal 2 displays on its screen an error message, and transmits again the appliance information acquisition request to the home gateway 6 (steps S116 and S117) . After the user selects any one specific electrical home appliance 4 (hereinafter, referred to as target appliance 4) from the displayed electrical home appliance list, the mobile communications terminal 2 transmits to the database center 7 an acquisition request for the corresponding appliance control program in accordance with the storage location thereof (step S119).

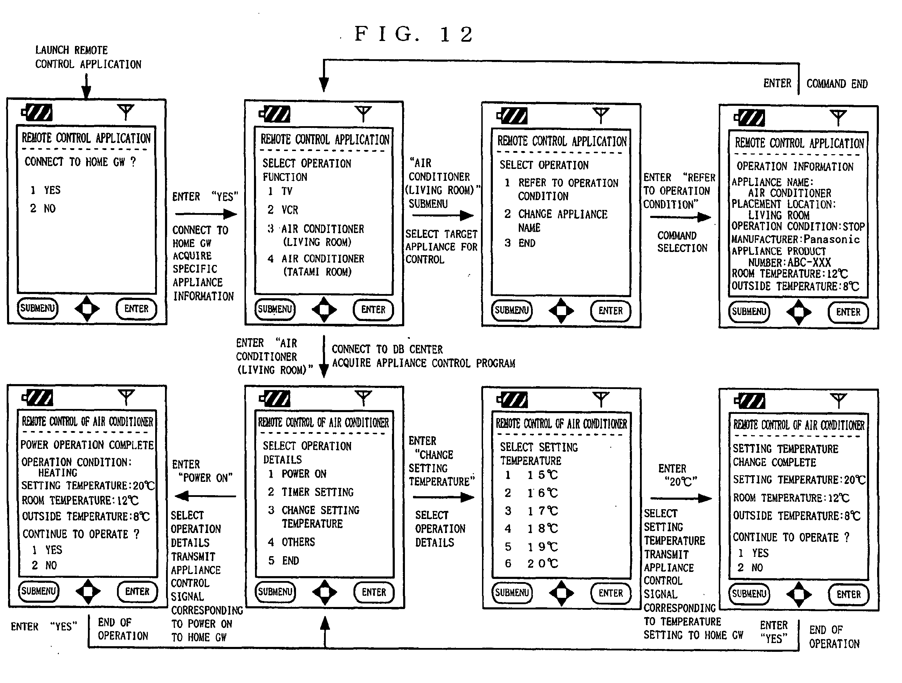

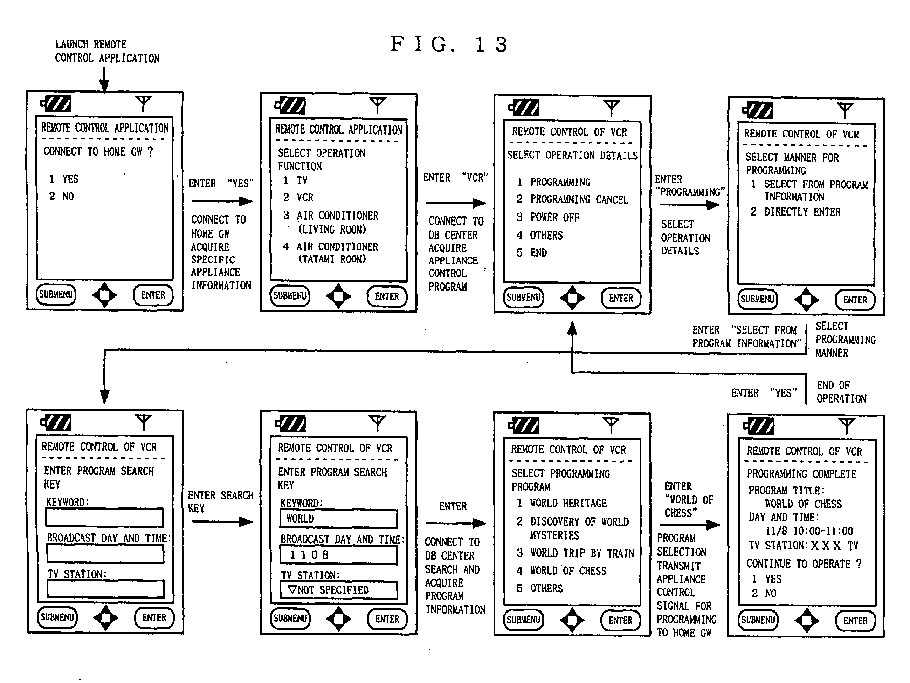

In the mobile communications terminal 2, the communications interface section 21 receives the appliance control program thus forwarded responding to the acquisition request from the database center .7. Then, the program execution section 23 interprets and executes the appliance control program (step S122). If the appliance control program is not correctly acquired, the mobile communications terminal 2 displays on its screen an error message, and transmits again the acquisition request for the appliance control program to the database center 7 (steps S120 and S121). While using the specific appliance information as appropriate, the program execution section 23 keeps interpreting and executing the appliance control program in an interactive manner with the user via the user interface section 24 until a desired operation to the target appliance 4 is determined. FIGS. 12 and 13 show an exemplary interactive manner. Specifically, FIG. 12 shows a case where the target appliance 4 is an air conditioner, while FIG. 13 shows a case with a videocassette recorder. Once an operation of the target appliance 4 is determined, the mobile communications terminal 2 forwards to the home gateway 6 an appliance control signal corresponding to the operation details (step S123).

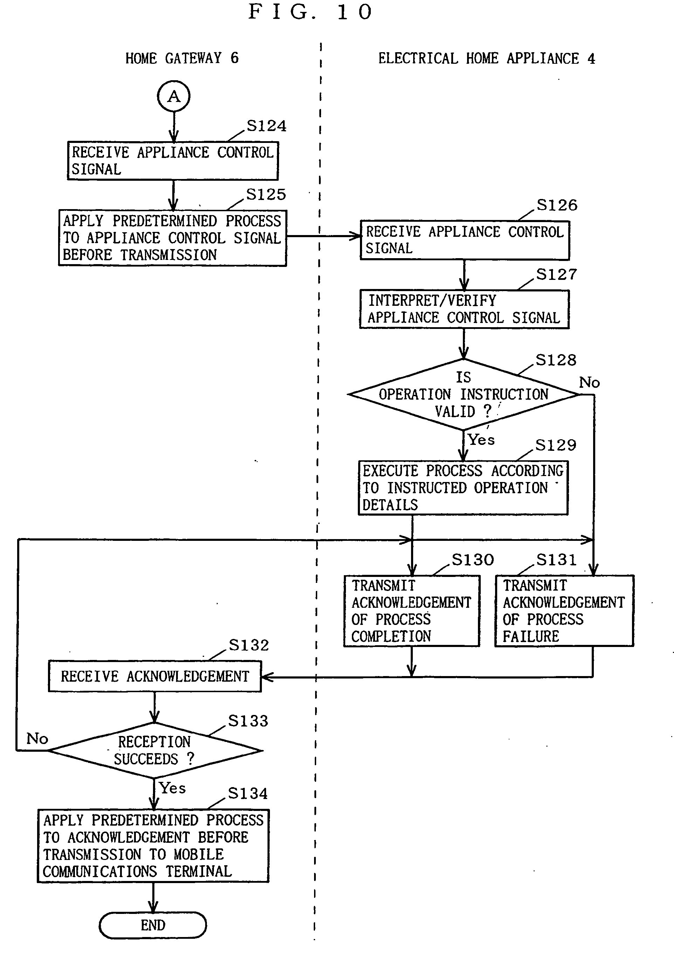

Referring to FIG. 10, after receiving the appliance control signal from the mobile communications terminal 2, the home gateway 6 applies thereto any needed process (e.g., address conversion, protocol conversion, message conversion) corresponding to the communications format with the target appliance 4. The result is then transmitted to the target appliance 4 (steps S124 and S125).

After receiving the appliance control signal provided by the home gateway 6, the target appliance 4 determines whether the operation details instructed thereby are valid or not through interpretation and verification thereof (steps S126 to S128). If determined as valid in step S128, the target appliance 4 executes, in the electrical home appliance function block 43, the process corresponding to the operation details instructed by the appliance control signal (step S129). After the process is through, the target appliance 4 forwards an acknowledgement of process completion to the home gateway 6 (step S130) . On the other hand, if determined as not valid in step S128, the target appliance 4 forwards to the home gateway 6 an acknowledgement of process error indicating that the process corresponding to the instructed operation failed to be executed (step S131).

After receiving the acknowledgement forwarded from the target appliance 4, the home gateway 6 applies thereto any needed process corresponding to the communications format with the target appliance 4, e.g., address conversion, protocol conversion, and message conversion. The result is then transmitted to the mobile communications terminal 2 (steps S132 and S134). If correct reception of the acknowledgement fails, the home gateway 6 requests that the target appliance 4 transmits the acknowledgement again (step S133).

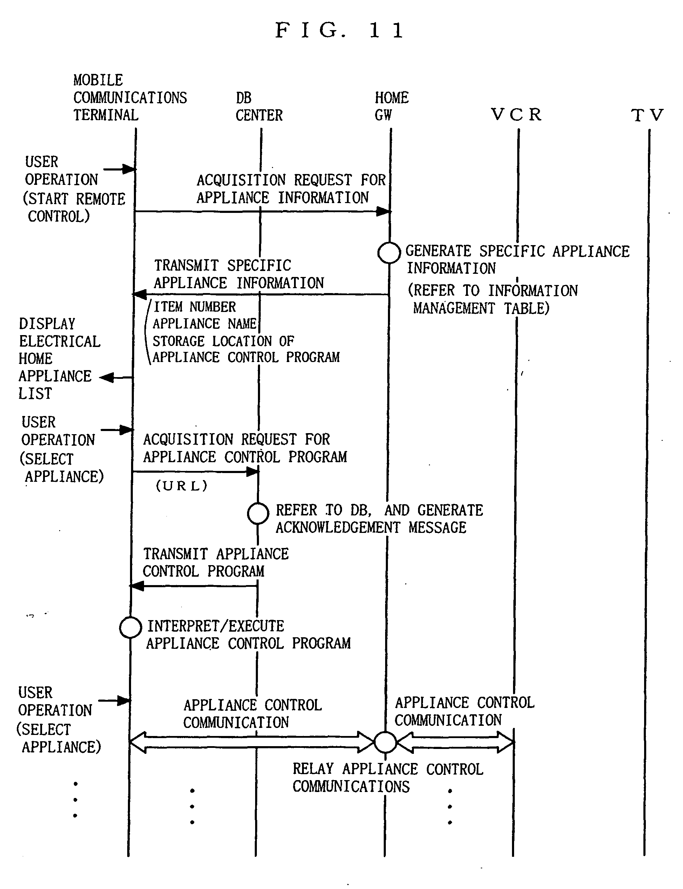

By going through the above process, the mobile communications terminal 2 can remotely control the electrical home appliance 4. FIG. 11 shows an exemplary sequence in a case where the target appliance for remote control is a VCR.

As described above, according to the appliance control system and method of the first embodiment, appliance control programs needed for operating various types of electrical home appliances are stored in a database for collective control on a network. In a house, a home gateway collectively manages information about the storage locations of those appliance control programs together with various types of information about the electrical home appliances. Such a structure allows a mobile communications terminal to give any desired instructions to the target appliance by interpreting and executing the appliance control program of the target appliance solely acquired from the database with reference to the home gateway.

Accordingly, for the mobile communications terminal and the home gateway, there is no need to carry unnecessary appliance control programs. For the users, without going through information update or appliance type change of their mobile communications terminals, it becomes possible to remotely control every electrical home appliance no matter which they currently have and/or will have.

### (Second Embodiment)

Exemplified in the above first embodiment is a case where one electrical home appliance 4 and an appliance control program have a one-to-one relationship therebetween, and thus the database 71 in the database center 7 stores an appliance control program for each of the electrical home appliances 4 which vary in manufacturer and type (see FIG. 5). Therein, the appliance control program is presumed as corresponding to any available functions. Consequently, the home gateway 6 includes storage locations using URLs, for example, with which the appliance control programs are uniquely identified by their storage locations on an electrical home appliance 4 basis.

The issue here is that, for the mobile communications terminal 2 to remotely control the electrical home appliance 4, most of the time, partially activating the functions of the electrical home appliance 4 will be enough. Similarly, the appliance control programs characterized differently in operation screen or operation procedure from those of manufactures may be provided by third-party vendors even though being identical in operation control details.

Therefore, in the second embodiment, described is an appliance control system in which, instead of using URLs for uniquely specifying the storage location of the appliance control program in the database 71, used is information previously classified according to any available functions (herein below, referred to as appliance profile information).

The structure of such an appliance control system of the second embodiment is similar to that of the first embodiment above (see FIG. 1). In the second embodiment, however, compared with the first embodiment, information informing of the storage locations of the appliance control programs in the database 71, the electrical home appliance 4, and the home gateway 6 is different, and the selection list to be provided to the mobile communications terminal 2 is different.

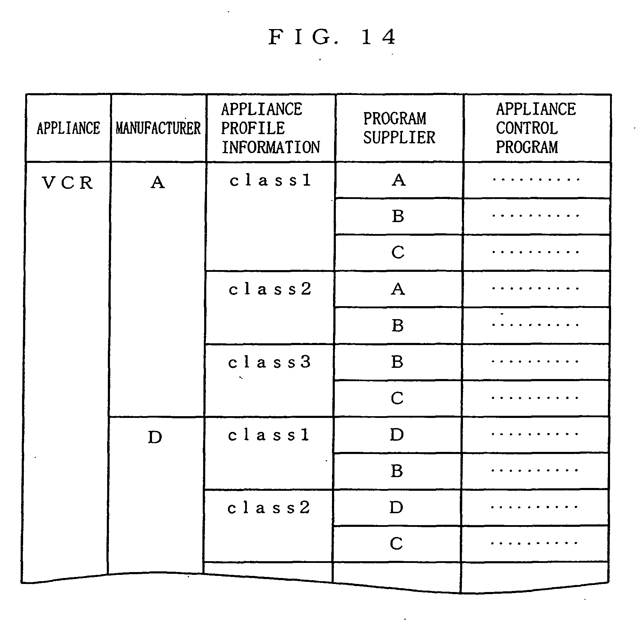

Focusing on those differences, in the appliance control system of the second embodiment, described referring to FIGS. 14 to 19 below is an appliance control method for remotely controlling the electrical home appliance 4 using the mobile communications terminal 2.

In the appliance control system of the second embodiment, the database 71 managed by the database center 7 previously stores a plurality of appliance control programs of the electrical home appliances 4 which vary in manufacturer and type as shown in FIG. 14. Referring to FIG. 14, the database 71. carries types of the electrical home appliances 4, and for each type, carries the manufactures of the electrical home appliances 4, and for each manufacturer, carries appliance profile information (class). In accordance therewith, an appliance control program and a supplier thereof (e.g., manufacturer, third-party vendor) are stored. In the present embodiment, each of the classes (e.g., class 1, class 2) classified as the appliance profile information is previously defined by which function(s) of the electrical home appliance 4 are activatable. In the FIG. 14 example of VCR, class 1 defines that all functions of the electrical home appliance 4 are activatable, class 2 defines that only a programming setting or resetting function thereof is activatable, and class 3 defines that only a programming checking function thereof is activatable. In such a case, for each of the program suppliers, the corresponding appliance control program is stored for activating thus defined function(s).

For each of the electrical home appliances 4, on the other hand, previously stored and retained is the appliance profile information (classes), each of which specifies which function (s) are available at the time of remote control. Although the control section 42 preferably stores and retains this appliance profile information, the electrical home appliance function block 43 will also suffice.

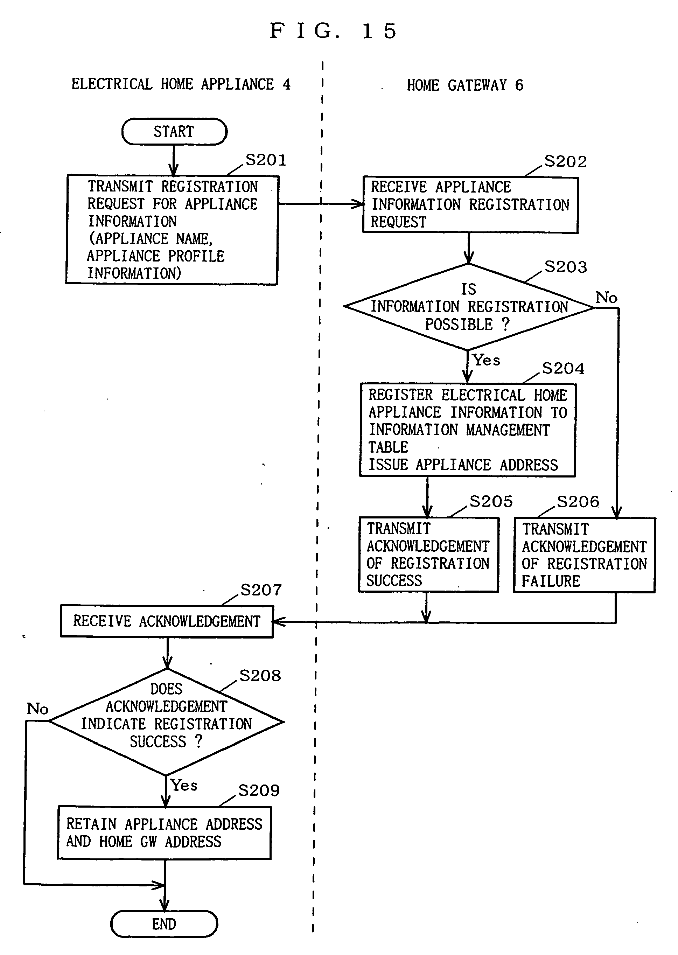

Referring to FIG. 15, after any one electrical home appliance 4 is connected to the household network 5 in the household area 3, the electrical home appliance 4 transmits, towards the home gateway 6 via the household network 5, a request for registering appliance information (step S201). Here, the request includes the appliance name of the electrical home appliance 4, the information inherent thereto, the appliance profile information corresponding thereto, and the like.

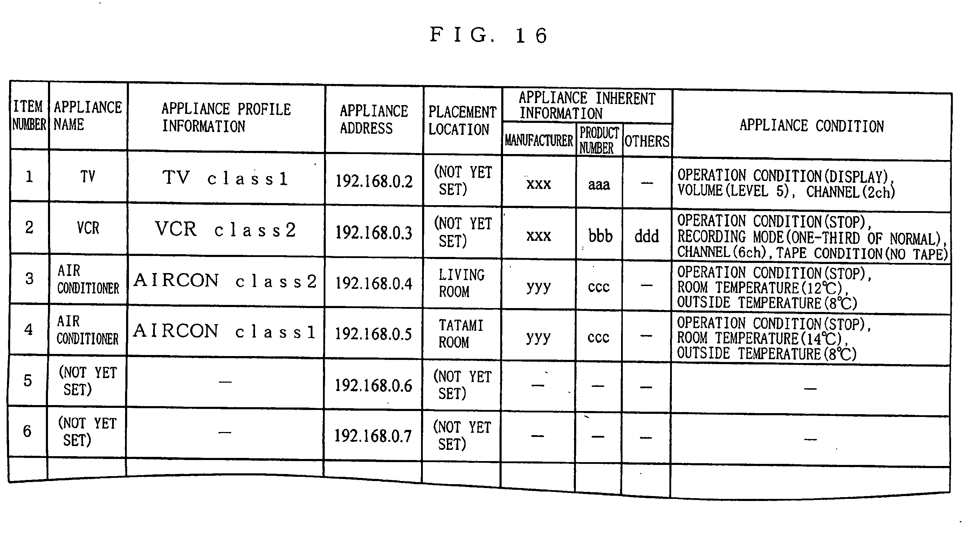

In response to the appliance information registration request from the electrical home appliance 4, the home gateway 6 determines whether or not any new electrical home appliance information is registerable (steps S202 and S203). This determination is made in the similar manner to the above. Here, the information management table of FIG. 16 includes the appliance profile information instead of the storage location of the appliance control program in that of the first embodiment (FIG. 7) .

If the new electrical home appliance information is determined as registerable in step S203, the home gateway 6 issues an appliance address on the household network 5 for the electrical home appliance 4 from which the request came, and registers the electrical home appliance information into the information management table (step S204) . The home gateway 6 then transmits, towards the electrical home appliance 4, an acknowledgement of registration success, including the appliance address and its own home GW address on the household network 5 (step S205). If the new electrical home appliance information is determined as not registerable in step S203, transmitted from the home gateway 6 to the electrical home appliance 4 is an acknowledgement of registration failure indicating that the electrical home appliance information failed to be registered (step S206).

After receiving the acknowledgement transmitted from the home gateway 6, the electrical home appliance 4 determines whether the acknowledgement indicates a registration success or failure (steps S207 and S208). If a registration success is determined in step S208, the electrical home appliance 4 stores and retains the transmitted appliance address and home GW address in the control section 42 or the electrical home appliance function block 43 (step S209). If a registration failure is determined in step S208, this registration requesting process is ended after the electrical home appliance 4 verifies that no connection has been established with the household network 5.

By going through such a process, the electrical home appliance 4 is connected to the household network 5, that is, the electrical home appliance information about the electrical home appliance 4 is fully registered to the home gateway 6. An exemplary sequence for the registration is equivalent to that of FIG. 8, except including the appliance profile information instead of the storage location of the appliance control program.

Described next is a technique of remotely controlling the electrical home appliance 4 from the mobile communications terminal 2 using the electrical home appliance information registered in the information management table of the home gateway 6.

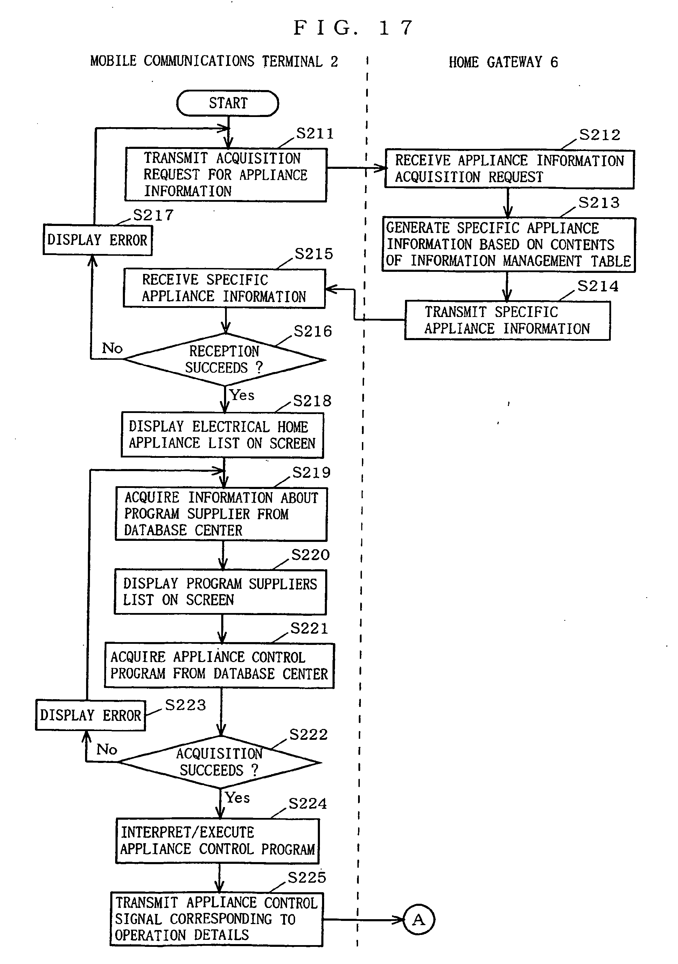

Referring to FIG. 17, assuming that a user's input is asking to operate the electrical home appliances 4, the mobile communications terminal 2 forwards, to the home gateway 6 via the network 1, an acquisition request for the appliance information (step S211) .

After receiving the appliance information acquisition request from the mobile communications terminal 2, the home gateway 6 refers to the contents of the information management table managed by the electrical home appliance information management section 63 for generating the specific appliance information. The resulting information is then forwarded to the mobile communications terminal 2 (steps S212 to S214). Note here that, the specific appliance information is set so as to include, at least, the appliance name and the appliance profile information.

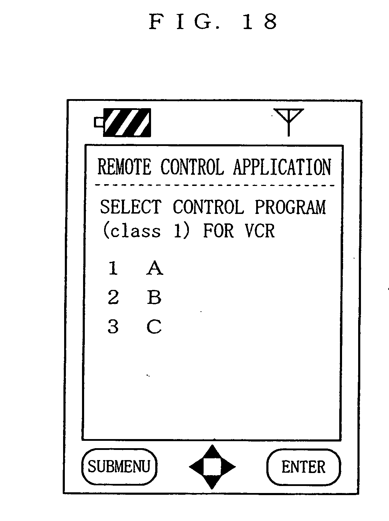

In response to the specific appliance information provided by the home gateway 6, the mobile communications terminal 2 displays on its screen an electrical home appliance list in accordance therewith, and then waits for a user's instruction on which to select (steps S215 and S218). Here, if correct acquisition of the specific appliance information fails, the mobile communications terminal 2 displays on its screen an error message, and transmits again the appliance information acquisition request to the home gateway 6 (steps S216 and S217). Then, once the user selects any one electrical home appliance 4 from the displayed electrical home appliance list, the mobile communications terminal 2 transmits a request to the database center 7 for forwarding information about program suppliers corresponding to the appliance profile information (class) of the selected electrical home appliance 4 (step S219). Based on thus received program supplier information, the mobile communications terminal 2 generates such a program supplier list as shown in FIG. 18 for display on its screen, and waits for a user's instruction on which to select (step S220). After the user selects any one program supplier out of the displayed program supplier list, the mobile communications terminal 2 transmits, towards the database center 7, an acquisition request for the appliance control program corresponding to the selected program supplier (step S221).

After receiving the appliance control program provided by the database center 7 responding to the acquisition request, the mobile communications terminal 2 interprets and executes the program (step S224). Herein, if correct reception of the appliance control program fails, the mobile communications terminal 2 displays on its screen an error message, and transmits again the request for acquiring the appliance control program to the database center 7 (steps S222 and S223). After the target appliance 4 is defined by operation, the mobile communications terminal 2 transmits the corresponding appliance control signal to the home gateway 6 (step S225).

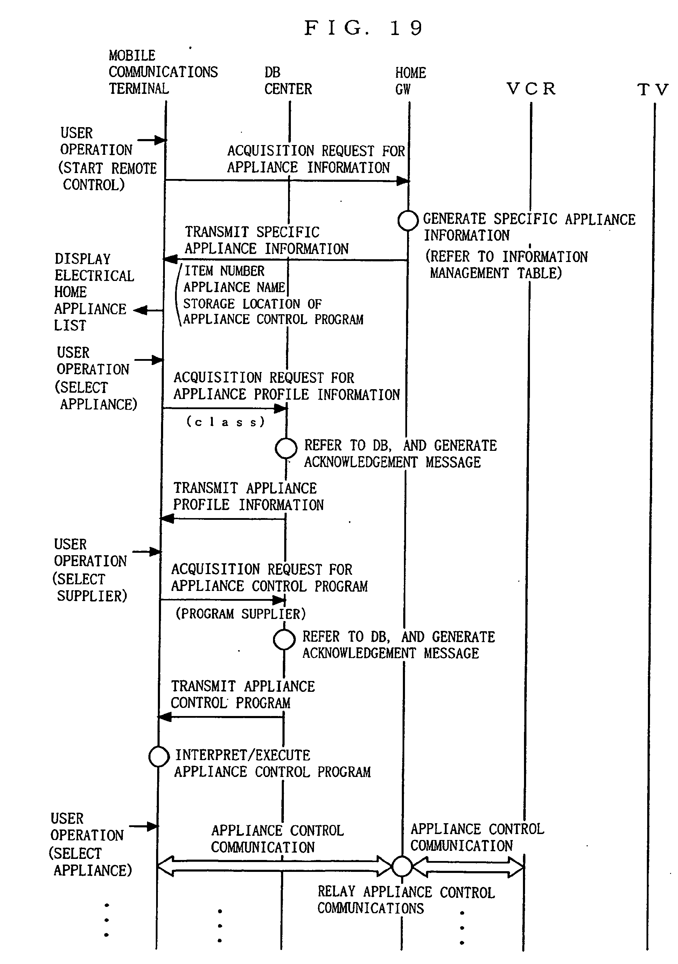

The process to be executed hereafter is the same as that described referring to FIG. 10, and thus no further description is given here. FIG. 19 shows an exemplary sequence in a case where the mobile communications terminal 2 remotely controls a VCR by going through the above process.

As described above, according to the appliance control system and method of the second embodiment, instead of URLs, for example, for uniquely specifying the storage location of the appliance control program in the database, used is the appliance profile information as a result of previous classification according to available functions. With such a structure, the database becomes able to carry a plurality of appliance control programs which vary in characteristics for the use of any one specific appliance control. Accordingly, users can enjoy a wider range of choices for control programs, and third-party vendors have a means of entry into the market for appliance control systems.

Note here that, described in the first embodiment is the case of using only the information about the storage location of the appliance control program, and in the second embodiment is the case of using only the appliance profile information. Clearly, both pieces of information may be used together, and if so, a choice of which to use may be left to the user.

### (Third Embodiment)

In the above first and second embodiments, described is the method under which the mobile communications terminal 2 acquires any desired appliance control program from the database center 7 for its interpretation/execution, thereby providing means by which the electric home appliances 4 can be controlled via the home gateway 6. To perform control under the method, however, there needs to be real-time instructions from the mobile communications terminal 2 to the home gateway 6, consequently requiring a communications link between the mobile communications terminal 2 and the home gateway 6 at all times.

In the following third embodiment, described is a method under which the electrical home appliances 4 can be controlled with no communications link established between the mobile communications terminal 2 and the home gateway 6. This is achieved by the home gateway 6 acquiring any desired appliance control program from the database center 7, and interpreting and executing as appropriate responding to a series of control instructions from the mobile communications terminal 2.

As to an appliance control system according to the third embodiment of the present invention, the structure thereof is almost the same as that of the above first embodiment (see FIG. 1) but the mobile communications terminal 2 and the home gateway 6 are slightly differed in structure.

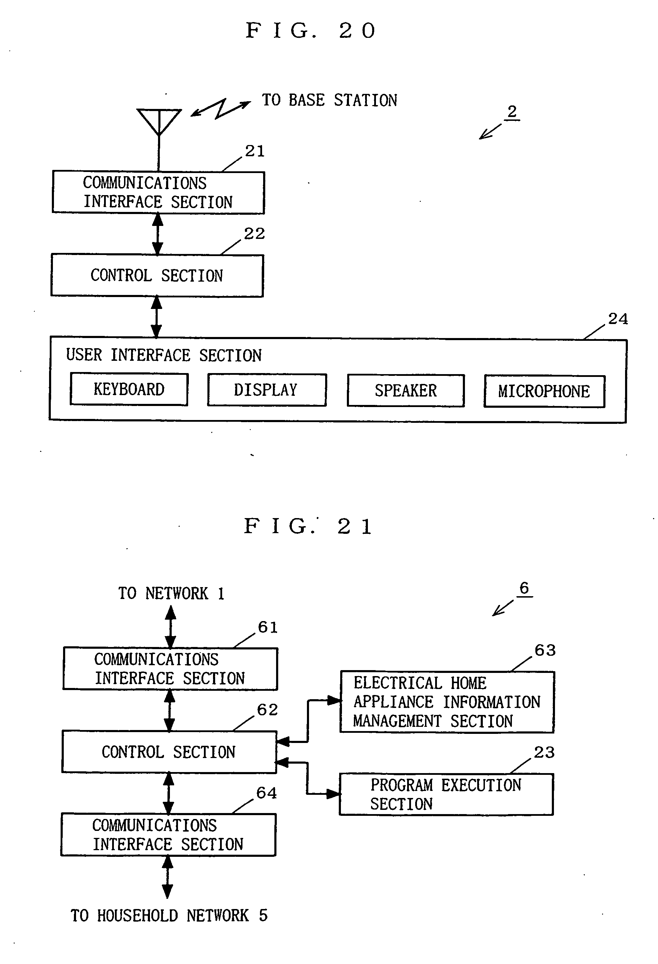

Referring to FIGS. 20 to 27, focusing on the aforementioned differences, described in detail below is an appliance control method for remotely controlling the electrical home appliances 4 using the mobile communications terminal 2 in the appliance control system of the third embodiment.

FIG. 20 shows a specific exemplary structure of the mobile communications terminal 2, which is assumed to be a mobile phone. In FIG. 20, the mobile communications terminal 2 includes the communications interface section 21, the control section 22, and the user interface section 24. FIG. 21 shows a specific exemplary structure of the home gateway 6. In FIG. 21, the home gateway 6 includes the communications interface section 61, the control section 62, the electrical home appliance information management section 63, the program execution section 23, and the communications interface section 64. The communications interface section 61 is an interface to the network 1, and the communications interface section 64 is an interface to the household network 5. As is known from FIGS. 20 and 21, in the appliance control system of the third embodiment, the program execution section 23 for executing the appliance control programs provided by the database center 7 and then outputting any corresponding appliance control signal as appropriate is provided in the home gateway 6 instead of in the mobile communications terminal 2.

In the appliance control system of the third embodiment in such a structure, described next is an appliance control method for remotely controlling the electrical home appliances 4 using the mobile communications terminal 2.

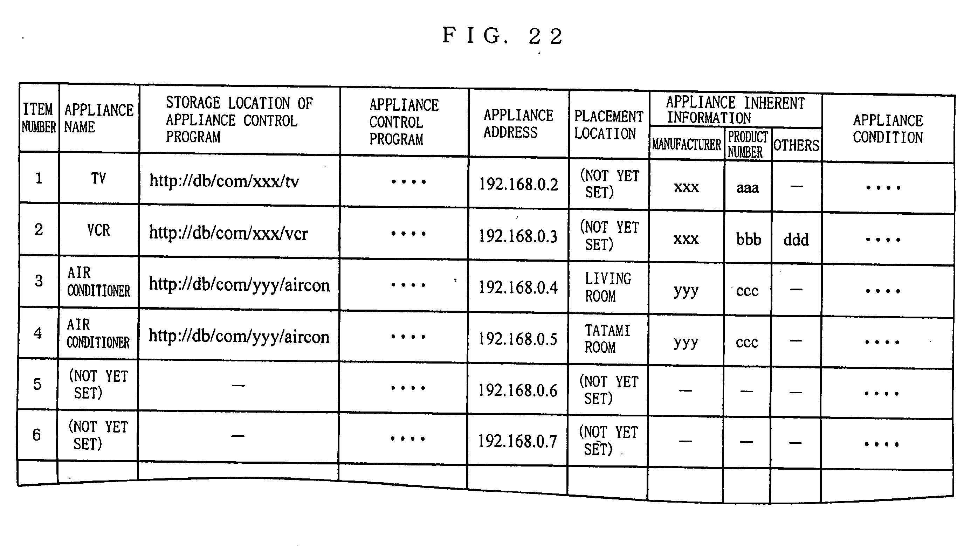

The database 71 managed by the database center 7 of the third embodiment previously stores, similarly to the first embodiment, the appliance control programs of the electrical home appliances 4 which vary in manufacturer and type (see FIG. 5). Similarly, as shown in FIG. 22, the information management table provided in the electrical home appliance information management section 63 of the home gateway 6 has a region for storing the appliance control programs on the electrical home appliance 4 basis.

First, described is a technique of registering, into the home gateway 6, the electrical home appliance information of the respective electrical home appliances 4 connected to the household network 5.

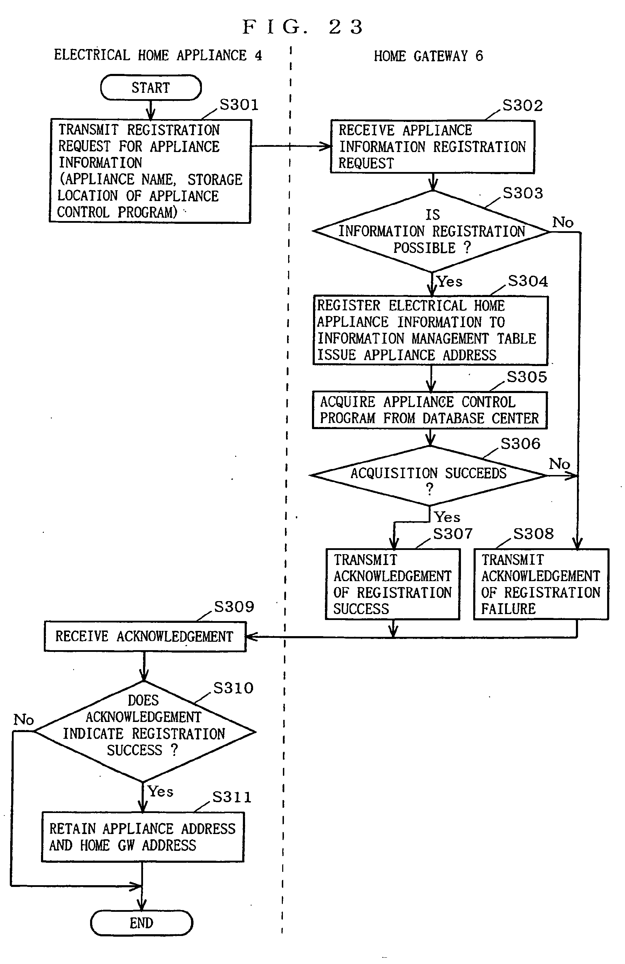

Referring to FIG. 23, in the household area 3, when any one electrical home appliance 4 is connected to the household network 5, the electrical home appliance 4 responsively transmits a registration request to the home gateway 6 via the household network 5 (step S301). The request is the one asking for registering appliance information, which includes the appliance name of the electrical home appliance 4, the information inherent thereto, and the storage location of the appliance control program corresponding thereto, for example. In response to such an appliance information registration request provided by the electrical home appliance 4, the home gateway 6 determines whether or not any new electrical home appliance information can be registered (steps S302 and S303). The determination is made in a similar manner to that above. If the new electrical home appliance information is determined as registerable in step S303, the home gateway 6 issues an appliance address on the household network 5 for the electrical home appliance 4 from which the request came, and registers the electrical home appliance information into the information management table (step S304). Thereafter, the home gateway 6 transmits to the database center 7 an acquisition request for the appliance control program corresponding to the storage location included in the appliance information acquisition request (step 5305). When succeeding in acquiring the appliance control program, the home gateway 6 transmits, towards the electrical home appliance 4, an acknowledgement of registration success including the appliance address and its own home GW address on the household network 5 (steps S306 and S307) . If registration of the new electrical home appliance information is failed, or if acquisition of the appliance control program is failed, transmitted from the home gateway 6 to the electrical home appliance 4 is an acknowledgement of registration failure indicating as such (steps S303, S306, and S308).

After receiving the acknowledgement transmitted from the home gateway 6, the electrical home appliance 4 determines whether the acknowledgement indicates a registration success or failure (steps S309 and S310). If a registration success is determined in step S310, the electrical home appliance 4 stores and retains the transmitted appliance address and home GW address in the control section 42 or the electrical home appliance function block 43 (step S311). If a registration failure is determined in step S310, this registration requesting process is ended after the electrical home appliance 4 verifies that no connection has been established with the household network 5.

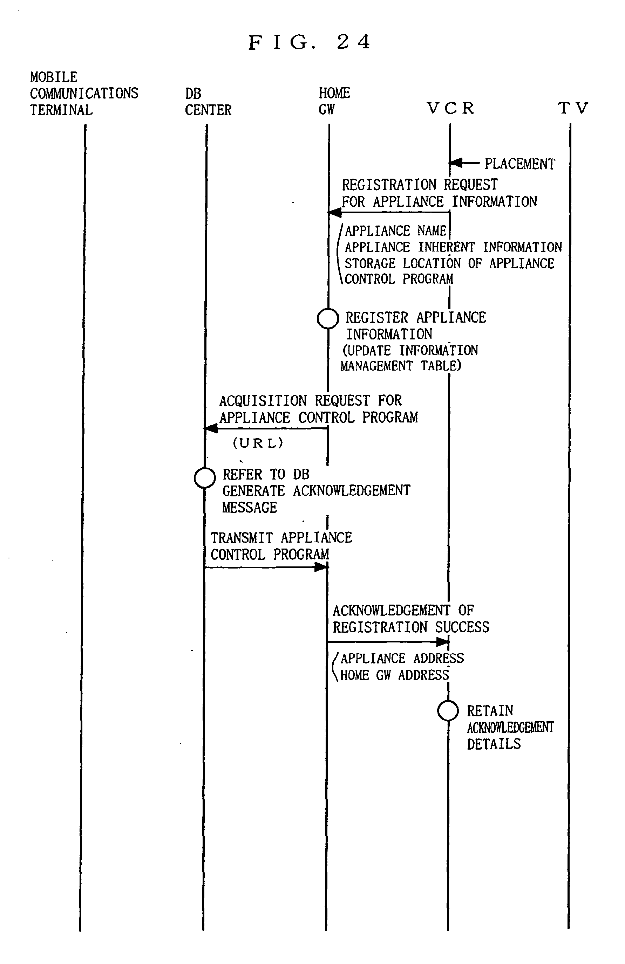

By going through such a process, the electrical home appliance 4 is connected to the household network 5, that is, the electrical home appliance information about the electrical home appliance 4 is fully registered to the home gateway 6. FIG. 24 shows an exemplary sequence in a case where registered is the electrical home appliance information about a VCR.

Described next is a technique of remotely controlling the electrical home appliances 4 from the mobile communications terminal 2 using the electrical home appliance information registered in the information management table in the home gateway 6.

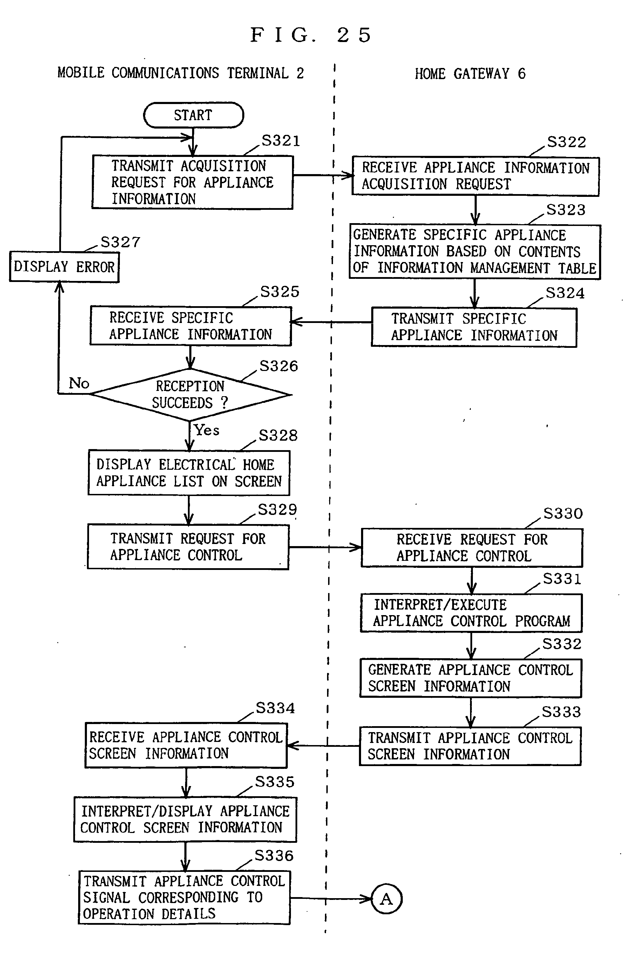

Referring to FIG. 25, assuming that a user's input is asking for operating the electrical home appliances 4, the mobile communications terminal 2 forwards, to the home gateway 6 via the network 1, an acquisition request for the appliance information (step S321) .

Upon reception of such an appliance information acquisition request from the mobile communications terminal 2, the home gateway 6 refers to the contents of the information management table managed by the electrical home appliance information management section 63 for generating the specific appliance information. The resulting information is forwarded to the mobile communications terminal 2 (steps S322 to S324). Note here that, the specific appliance information is set so as to include at least the appliance name.

In response to the specific appliance information forwarded by the home gateway 6, the mobile communications terminal 2 displays on its screen an electrical home appliance list in accordance therewith, and then waits for a user's instruction on which to select (steps S325 and S328). Here, if correct receipt of the specific appliance information fails, the mobile communications terminal 2 displays on its screen an error message, and transmits again the appliance information acquisition request to the home gateway 6 (steps S326 and 327). After the user selects any one specific electrical home appliance 4 from the displayed electrical home appliance list, the mobile communications terminal 2 transmits to the home gateway 6 a request for controlling the selected target appliance 4 (step S329).

After receiving the appliance control request from the mobile communications terminal 2, the home gateway 6 interprets and executes the appliance control program of the target appliance 4 (steps S330 and S331). The home gateway 6 then generates any predetermined appliance control screen information based on the appliance control program, and then transmits the result to the mobile communications terminal 2 (steps S332 and S333).

After receiving the appliance control screen information from the home gateway 6, the mobile communications terminal 2 interprets the information for display on its screen (see FIG. 12 or 13 for exemplary displays), and then waits for a user' s instruction on what to select (steps S334 and S335). Once the user defines the target appliance 4 by operation, the mobile communications terminal 2 forwards any corresponding appliance control signal to the home gateway 6 (step S336).

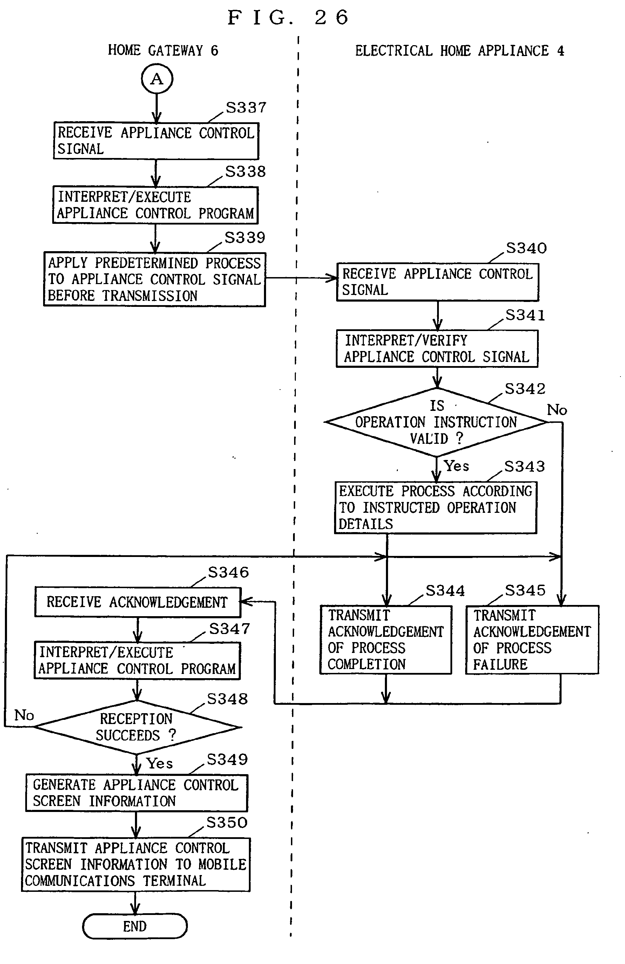

Referring to FIG. 26, after receiving the appliance control signal from the mobile communications terminal 2, the home gateway 6 interprets and executes the appliance control signal in accordance with the appliance control program, and then applies thereto any needed process corresponding to the communications format with the target appliance 4. The result is then transmitted to the target appliance 4 (steps S337 to S339).

After receiving the appliance control signal provided by the home gateway 6, the target appliance 4 determines whether the operation details instructed thereby are valid through interpretation and verification thereof (steps S340 to S342) . If determined as valid in step S342, the target appliance 4 executes, in the electrical home appliance function block 43, the process corresponding to the operation details instructed by the appliance control signal (step S343). After the process is through, the target appliance 4 forwards an acknowledgement of process completion to the home gateway 6 (step S344). On the other hand, if determined as not valid in step S342, the target appliance 4 forwards to the home gateway 6 an acknowledgement of a process error indicating that the process corresponding to the instructed operation failed to be executed (step S345).

After receiving the acknowledgement from the target appliance 4, the home gateway 6 applies thereto any needed process corresponding to the communications format with the target appliance 4, and then interprets and executes the appliance control signal in accordance with the appliance control program (steps S346 and S347). If correct reception of the acknowledgement fails, the home gateway 6 asks the target appliance 4 to transmit the acknowledgement again (step S348). Then, the home gateway 6 generates the appliance control screen information based on the appliance control program, and the result is transmitted to the mobile communications terminal 2 (steps S349 and S350).

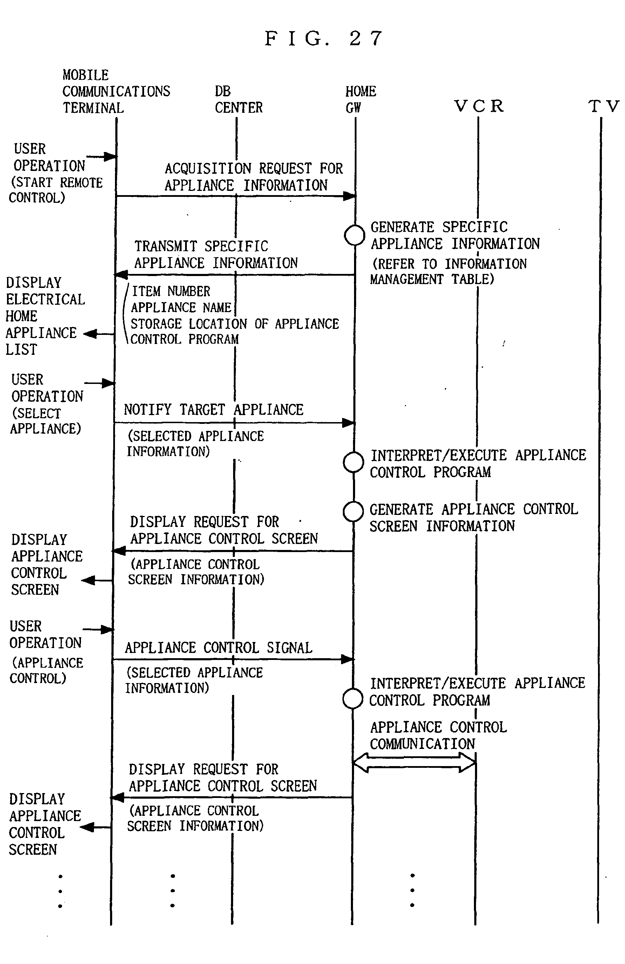

By going through the above process, the mobile communications terminal 2 can successfully remotely control the electrical home appliance 4. FIG.27 shows an exemplary sequence in a case where the target appliance for remote control is a VCR.

As is evident from the above, according to the appliance control system and method of the third embodiment, the home gateway acquires and retains the appliance control programs so that the storage resource of the mobile communications terminal can be effectively utilized. Furthermore, the mobile communications terminal previously provides the home gateway with a series of control-related instructions. Thus, there is no need for a communications link between the mobile communications terminal and the home gateway at the time of actual control, thereby successfully enabling the home gateway to solely control the electrical home appliances.

### (Fourth Embodiment)

Described in the above first to third embodiments is the appliance control system in which the home gateway 6 keeps track of the information about the storage locations of the appliance control programs and the appliance profile information of the electrical home appliances 4. Such information is not large in data size, and thus alternatively, may be kept track by the mobile communications terminal 2.

Therefore, in the following fourth embodiment, described is an appliance control system in which, instead of using the home gateway 6, the mobile communications terminal 2 keeps track of the information about the storage locations of the appliance control programs and the appliance profile information of the electrical home appliances 4.

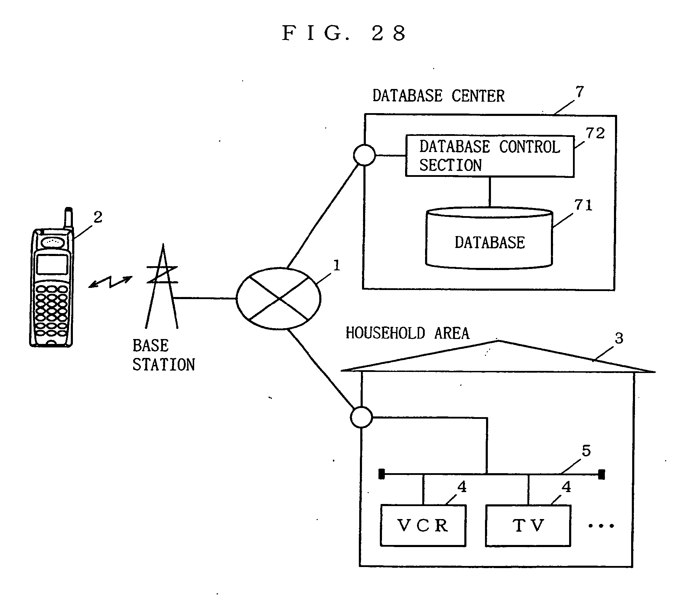

FIG. 28 is a schematic diagram showing the structure of such an appliance control system according to the fourth embodiment of the present invention. In FIG. 28, in the appliance control system of the fourth embodiment, the mobile communications terminal 2 is connected to both the household area 3 and the database center 7 via the network 1 such as a public network or the Internet. Herein, the mobile communications terminal 2 gives instructions for operation of electrical home appliances located in the household area 3. In the household area 3, the electrical home appliances 4 are each connected to the network 1 via the household network 5. The database center 7 includes the database 71 and the database control section 72. Herein, the database 71 carries appliance control programs each corresponding to the electrical home appliances which vary in manufacturer and type. The database control section 72 interfaces between the network 1 and the database 71.

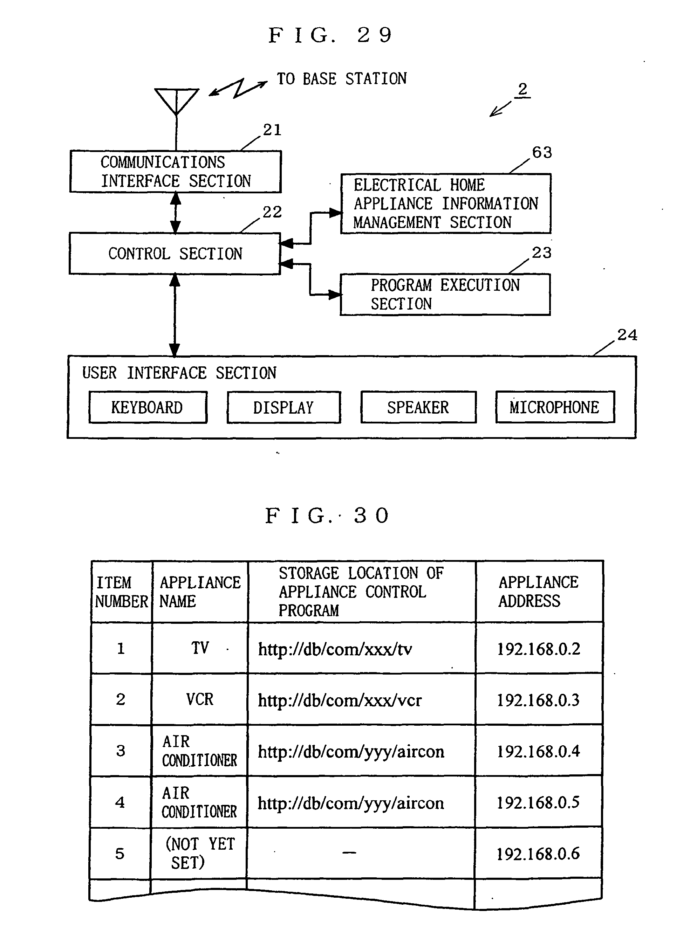

FIG. 29 shows a specific exemplary structure of the mobile communications terminal 2, which is assumed to be a mobile phone. In FIG. 29, the mobile communications terminal 2 includes the communications interface section 21, the control section 22, the program execution section 23, the user interface section 24, and the electrical home appliance information management section 63. As is known from FIG. 29, in the appliance control system of the fourth embodiment, the mobile communications terminal 2 includes the electrical home appliance information management section 63, which keeps track of various information about the electrical home appliances 4 connected to the household network 5 using a predetermined information management table. Here, the electrical home appliances 4 are exemplarily shown in FIG. 4 for their structures.

In the appliance control system of the fourth embodiment in the above structure, described next is an appliance control method for remotely controlling the electrical home appliances 4 using the mobile communications terminal 2.

The database 71 managed by the database center 7 of the fourth embodiment previously stores, similarly to the above first embodiment, the appliance control programs corresponding to the electrical home appliances which vary in manufacturer and type (see FIG. 5). Further, the information management table provided in the electrical home appliance information management section 63 in the mobile communications terminal 2 has, as shown in FIG. 30, a region for storing the appliance control programs on the electrical home appliance 4 basis.

In the appliance control system of the fourth embodiment in the above structure, described next is an appliance control method for remotely controlling the electrical home appliances 4 using the mobile communications terminal 2.

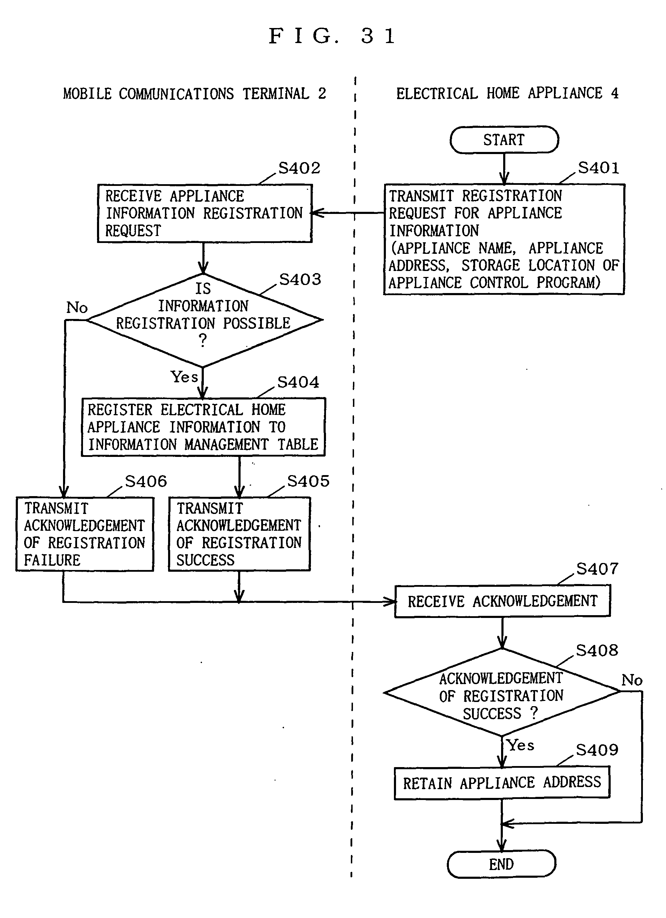

Referring to FIG. 31, in the household area 3, when any one electrical home appliance 4 is connected to the household network 5, the electrical home appliance 4 responsively transmits a registration request to the mobile communications terminal 2 via the household network 5 (step S401). The request is the one asking for registering appliance information, which includes the appliance name of the electrical home appliance 4, the appliance address thereof, and the storage location of the appliance control program corresponding thereto, for example.

In response to such an appliance information registration request provided by the electrical home appliance 4, the mobile communications terminal 2 determines whether or not any new electrical home appliance information can be registered (steps S402 and S403). The determination factor at this time is whether a predetermined information management table in the electrical home appliance information management section 63 has any free space enough for registering the electrical home appliance information.

In step S403, if the electrical home appliance information is determined as registerable, the mobile communications terminal 2 registers the electrical home appliance information to the information management table (step S404). Thereafter, the mobile communications terminal 2 transmits to the electrical home appliance 4 an acknowledgement of registration success, including the appliance address (step S405). On the other hand, if the electrical home appliance information is determined as not registerable in step S403, transmitted from the mobile communications terminal 2 to the electrical home appliance 4 is an acknowledgement of registration failure indicating that the electrical home appliance information failed to be registered (step S406).

After receiving the acknowledgement transmitted from the mobile communications terminal 2, the electrical home appliance 4 determines whether the acknowledgement indicates a registration success or failure (steps S407 and S408). If a registration success is determined in step S408, the electrical home appliance 4 stores and retains the forwarded appliance address into the control section 42 or the electrical home appliance function block 43 (step S409). If a registration failure is determined in step S408, on the other hand, the registration requesting process is ended after the electrical home appliances 4 verifies that no connection has been established with the household network 5. In this case, the electrical home appliance 4 may transmit again the appliance information registration request to the mobile communications terminal 2, or may do so after elapse of a certain length of time.

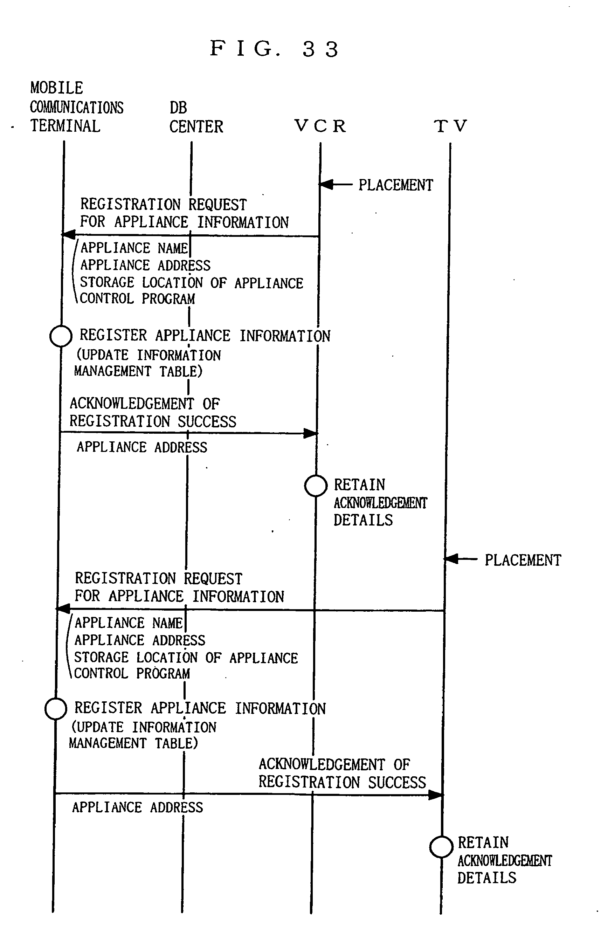

By going through such a process, the electrical home appliance 4 is connected to the household network 5, that is, the electrical home appliance information about the electrical home appliance 4 is fully registered to the mobile communications terminal 2 (electrical home appliance information management section 63). FIG. 33 shows an exemplary sequence in a case where registered is the electrical home appliance information about a VCR and a TV.

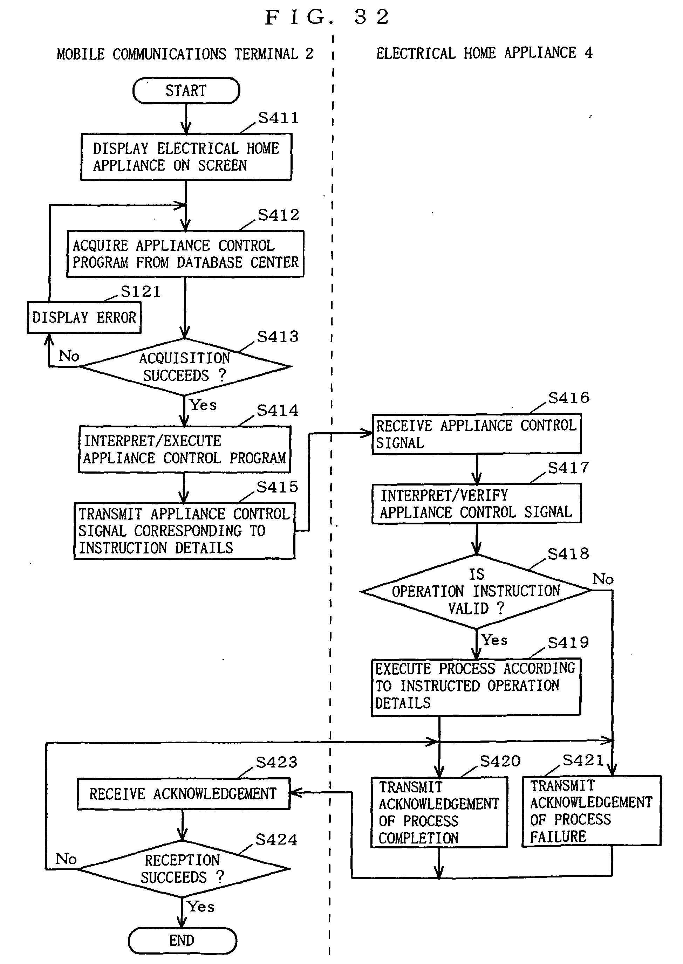

Referring to FIG. 32, assuming that a user's input is asking for operating the electrical home appliance 4, the mobile communications terminal 2 displays on its screen an electrical home appliance list based on the contents of the information management table managed by the electrical home appliance information management section 63, and then waits for a user's instruction on which to select (step S411). After the user selects any one specific electrical home appliance 4 from the displayed electrical home appliance list, the mobile communications terminal 2 transmits to the database center 7 an acquisition request for the corresponding appliance control program in accordance with the storage location thereof (step S412). In the mobile communications terminal 2, the communications interface section 21 receives the appliance control program thus forwarded responding to the acquisition request from the database center 7. Then, the program execution section 23 interprets and executes the program (step S414). If correct acquisition of the appliance control program fails, the mobile communications terminal 2 displays on its screen an error message, and transmits again to the database center 7 the acquisition request for the appliance control program (steps S413 and S414). Once an operation of the target appliance 4 is determined, the mobile communications terminal 2 forwards to the target appliance 4 an appliance control signal corresponding to the operation details (step S415).

After receiving the appliance control signal provided by the mobile communications terminal 2, the target appliance 4 determines whether the operation details instructed thereby are valid or not through interpretation and verification thereof (steps S416 to S418). If determined as valid in step S418, the target appliance 4 executes, in the electrical home appliance function block 43, the process corresponding to the operation details instructed by the appliance control signal (step S419). After the process is through, the target appliance 4 forwards an acknowledgement of process completion to the mobile communications terminal 2 (step S420). If determined as not valid in step S418, the target appliance 4 forwards to the mobile communications terminal 2 an acknowledgement of process error indicating that the process failed to be executed as instructed (step S421).

The mobile communications terminal 2 receives the acknowledgement provided by the target appliance 4 (step S423). Here, if correct reception of the acknowledgement fails, the mobile communications terminal 2 requests the target appliance 4 to transmit thereto again the acknowledgement (step S424).

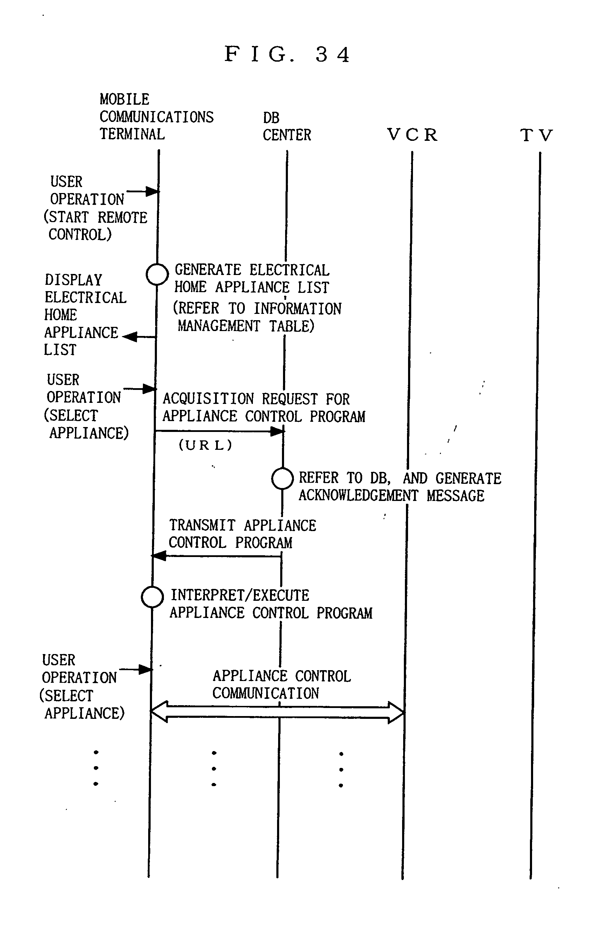

By going through the above process, the mobile communications terminal 2 can successfully remotely control the electrical home appliances 4. FIG. 34 shows an exemplary sequence in a case where the target appliance for remote control is a VCR.

As described above, according to the appliance control system and method of the fourth embodiment, the mobile communications terminal can provide any desired operation instructions to the target electrical home appliance without including the home gateway in the household area.

Note here that, described in the fourth embodiment is the appliance control system using information about the storage locations of the appliance control programs as in the above first embodiment. However, using the appliance profile information described in the second embodiment clearly leads to the same effects. Alternatively, both the information about the storage locations of the appliance control programs and the appliance profile information will be used together.

Typically, the appliance control methods of the first to fourth embodiments are realized by a CPU interpreting and executing any predetermine program data with which the above procedure stored in a storage device (e.g., ROMs, RAMs, hard disks) is executable. If this is the case, the program data may be installed into the storage device via a recording medium such as CD-ROMs, and flexible disks. Alternatively, the program data may be directly executed on the recording medium.

While the invention has been described in detail, the foregoing description is in all aspects illustrative and not restrictive. It is understood that numerous other modifications and variations can be devised without departing from the scope of the invention as defined in the appended claims.

## Claims

1. An appliance control system for remotely controlling an arbitrary electrical home appliance (4) in a local area (3) by using a mobile communications terminal (2), the system comprising:
a database (71) storing at least a piece of appliance control information needed to define a signal for directly controlling any one of various types of electrical home appliances (14);
at least one electrical home appliance (4) operable to retain, as storage location information, information about access to the database (71) that stores the own appliance control information of the electrical home appliance (4);
a home gateway (6) connecting with the electrical home appliance (4) via a local area network (5), and operable to collectively control the storage location information retained by the electrical home appliance (4) connected thereto;
a mobile communications terminal (2) operable to remotely control the electrical home appliance (4) based on the appliance control information stored in the database (71) using the storage location information collectively controlled by the home gateway (6); and
a network (1) connecting among the database (71), the home gateway (6), and the mobile communications terminal (2).

2. The application control system according to claim 1, wherein
the database (71) is operable to store a single piece of said appliance control information for each of the electrical home appliances (4), and the storage location information uniquely specifies the appliance control information,
in response to a request from the mobile communications terminal (2) for remotely controlling the electrical home appliance (4), the home gateway (6) is operable to transmit the storage location information of the electrical home appliance (4) to the mobile communications terminal (2),
based on the storage location information received from the home gateway (6), the mobile communications terminal (2) is operable to acquire from the database (71) the appliance control information corresponding to the electrical home appliance (4) requested for remote control, is operable to interpret and execute the acquired appliance control information, and is operable to transmit a control signal corresponding to any desired operation details to the home gateway (6), and
the home gateway (6) is operable to provide the received control signal to the electrical home appliance (4) requested for remote control.

3. The appliance control system according to claim 1, wherein
the database (71) is operable to store a plurality of said appliance control information for each of the electrical home appliances (4), and the storage location information is operable to specify two or more of the plurality of said appliance control information,
in response to a request from the mobile communications terminal (2) for remotely controlling the electrical home appliance (4), the home gateway (6) is operable to transmit the storage location information of the electrical home appliance (4) to the mobile communications terminal (2),
based on the storage location information received from the home gateway (6), the mobile communications terminal (2) is operable to selectively acquire, from the database (71), any desired one of the appliance control information from among the two or more of the plurality of said appliance control information corresponding to the electrical home appliance (4) requested for remote control, is operable to interpret and execute the acquired appliance control information, and is operable to transmit a control signal corresponding to any desired operation details to the home gateway (6), and
the home gateway (6) is operable to provide the received control signal to the electrical home appliance (4) requested for remote control.

4. The appliance control system according to claim 1, wherein
the database (71) is operable to store a single piece of said appliance control information for each of the electrical home appliances (4), and the storage location information uniquely is operable to specify the appliance control information,
the home gateway (6), after connecting with the electrical home appliance (4) via the local area network (5), is operable to acquire in advance from the database (71) the appliance control information specified by the storage location information of the connected electrical home appliance (4),
in response to a request from the mobile communications terminal (2) for remotely controlling the electrical home appliance (4), the home gateway (6) is operable to transmit an operation screen based on the appliance control information to the mobile communications terminal (2),
using the operation screen received from the home gateway (6), the mobile communications terminal (2) is operable to transmit an instruction to the home gateway (6) including any desired operation details of the electrical home appliance (4) requested for remote control, and
the home gateway (6) is operable to interpret and execute the appliance control information in accordance with the received instruction, and is operable to provide a control signal corresponding to the desired operation details to the electrical home appliance (4) requested for remote control.

5. The appliance control system according to claim 2, wherein
the home gateway (6) is operable to manage the storage location information together with an appliance name predetermined for the electrical home appliance (4), and in response to the request, is operable to transmit the appliance name together with the storage location information to the mobile communications terminal (2), and wherein the mobile communications terminal (2) is operable to select the electrical home appliance (4) requested for remote control by referring to the appliance name received from the home gateway (6).

6. The appliance control system according to claim 5, wherein
the home gateway (6) further is operable to manage an appliance condition relating to an operation and a setting of the electrical home appliance (4), and in response to the request, is operable to transmit the appliance condition together with the storage location information and the appliance name to the mobile communications terminal (2), and wherein the mobile communications terminal (2) is operable to determine whether the operation details are valid by referring to the appliance condition received from the home gateway (6).

7. The appliance control system according to claim 1, wherein the storage location information collectively controlled by the home gateway (6) can be arbitrarily changed.

8. An appliance control method for remotely controlling an arbitrary electrical home appliance (4) in a local area (3) using a mobile communications terminal (2) in a system wherein a network (1) connects a database (71) storing at least a piece of appliance control information needed to define a signal for directly controlling any one of various types of electrical home appliances (4); a home gateway (6) connecting with at least one of the electrical home appliances (4) operable to retain, as storage location information, information about access to the database (71) that stores the own appliance control information of the electrical home appliance (4) via a local area network (5); and the mobile communications terminal (2), wherein
the home gateway (6), after connecting with the electrical home appliance (4) via the local network (5), acquires and manages the storage location information retained by the electrical home appliance (4) connected thereto, and
using the storage location information managed by the home gateway (6), the mobile communications terminal (2) remotely controls the electrical home appliance (4) based on the appliance control information stored in the database (71).

9. The appliance control method according to claim 8, wherein the database (71) stores a single piece of said appliance control information for each of the electrical home appliances (4), and the storage location information uniquely the appliance control information, and
the method further comprises the steps of:
transmitting, by the home gateway (6), the storage location information of the electrical home appliance (4) to the mobile communications terminal (2) in response to a request from the mobile communications terminal (2) for remotely controlling the electrical home appliance (4);
acquiring from the database (71), by the mobile communications terminal (2), the appliance control information corresponding to the electrical home appliance (4) requested for remote control based on the storage location information received from the home gateway (6);
interpreting and executing, by the mobile communications terminal (2), the appliance control information acquired from the database (71), and transmitting a control signal corresponding to any desired operation details to the home gateway (6); and
providing, by the home gateway (6), the control signal received from the mobile communications terminal (2) to the electrical home appliance (4) requested for remote control.

10. The appliance control method according to claim 8, wherein
the database (71) stores a plurality of said appliance control information for each of the electrical home appliances (4), and the storage location information specifies two or more of the plurality of said appliance control information, and
the method further comprises the steps of:
transmitting, by the home gateway (6), the storage location information of the electrical home appliance (4) to the mobile communications terminal (2) in response to a request from the mobile communications terminal (2) for remotely controlling the electrical home appliance (4);
selectively acquiring, by the mobile communications terminal (2), from the database (71), any desired one of the appliance control information from among the two or more of the plurality of said appliance control information corresponding to the electrical home appliance (4) requested for remote control based on the storage location information provided from the home gateway (6) ;
interpreting and executing, by the mobile communications terminal (2), the appliance control information acquired from the database (71), and transmitting a control signal corresponding to any desired operation details to the home gateway (6); and
providing, by the home gateway (6), the control signal received from the mobile communications terminal (2) to the electrical home appliance (4) requested for remote control.

11. The appliance control method according to claim 8, wherein
the database (71) stores a single piece of said appliance control information for each of the electrical home appliances (4), and the storage location information uniquely specifies the appliance control information, and
the method comprising the steps of:
acquiring in advance from the database (71), by the home gateway (6), after the home gateway (6) connects with the electrical home appliance (4) via the local area network (5), the appliance control information specified by the storage location information of the connected electrical home appliance (4);
transmitting, by the home gateway (6), in response to a request from the mobile communications terminal (2) operable to remotely control the electrical home appliance (4), an operation screen based on the appliance control information of the electrical home appliance (4) to the mobile communications terminal (2);
transmitting an instruction to the home gateway (6), by the mobile communications terminal (2), including any desired operation details of the electrical home appliance (4) requested for remote control using the operation screen received from the home gateway (6); and
interpreting and executing, by the home gateway (6), the appliance control information in accordance with the instruction received from the mobile communications terminal (2), and providing a control signal corresponding to the desired operation details to the electrical home appliance (4) requested for remote control.

12. The appliance control method according to claim 9, further comprising the steps of:
transmitting in response to the request, by the home gateway (6), an appliance name predetermined for the electrical home appliance (4) and managed together with the storage location information to the mobile communications terminal (2) together with the storage location information; and
selecting, by the mobile communications terminal (2), the electrical home appliance (4) requested for remote control by referring to the appliance name received from the home gateway (6).

13. The appliance control method according to claim 12, further comprising the steps of:
transmitting in response to the request, by the home gateway (6), an appliance condition further managed thereby relating to an operation and a setting of the electrical home appliance (4) together with the storage location information and the appliance name; and
determining, by the mobile communications terminal (2), whether the operation details are valid by referring to the appliance condition received from the home gateway (6).

14. The appliance control method according to claim 8, wherein the storage location information managed by the home gateway (6) can be arbitrarily changed.

## Patentansprüche

1. Gerätesteuersystem zum Fernsteuern eines beliebigen elektrischen Haushaltsgeräts (4) in einem Heimbereich (3) durch Verwendung eines mobilen Kommunikationsendgeräts (2), wobei das System umfasst:
eine Datenbank (71), die mindestens einen Gerätesteuerinformationsteil speichert, welcher zum Definieren eines Signals zum direkten Steuern eines von verschiedenen Typen elektrischer Haushaltsgeräte (14) erforderlich ist;
zumindest ein elektrisches Haushaltsgerät (4), welches betriebsfähig ist, als Speicherortsinformationen Informationen über einen Zugriff auf die Datenbank (71) zu halten, welche die eigenen Gerätesteuerinformationen des elektrischen Haushaltsgeräts (4) speichert;
ein Heim-Gateway (6), welches über ein lokales Netzwerk (5) mit dem elektrischen Haushaltsgerät (4) verbunden ist, und betriebsfähig ist, die durch das damit verbundene elektrische Haushaltsgerät (4) gehaltenen Speicherortsinformationen kollektiv zu steuern;
ein mobiles Kommunikationsendgerät (2), welches betriebsfähig ist, das elektrische Haushaltsgerät (4) auf Grundlage der in der Datenbank (71) gespeicherten Gerätesteuerinformationen unter Verwendung der durch das Heim-Gateway (6) kollektiv gesteuerten Speicherortsinformationen fernzusteuern; und
ein Netzwerk (1), welches zwischen der Datenbank (71), dem Heim-Gateway (6), und dem mobilen Kommunikationsendgerät (2) verbindet.

2. Gerätesteuersystem nach Anspruch 1, wobei
die Datenbank (71) betriebsfähig ist, einen einzelnen Teil der Gerätesteuerinformationen für jedes der elektrischen Haushaltsgeräte (4) zu speichern, und wobei die Speicherortsinformationen die Gerätesteuerinformationen eindeutig bestimmen, wobei
das Heim-Gateway (6) betriebsfähig ist, in Erwiderung auf eine Anfrage vom mobilen Kommunikationsendgerät (2) zum Fernsteuern des elektrischen Haushaltsgeräts (4), die Speicherortsinformationen des elektrischen Haushaltsgeräts (4) an das mobile Kommunikationsendgerät (2) zu übertragen, wobei
das mobile Kommunikationsendgerät (2) betriebsfähig ist, auf Grundlage der vom Heim-Gateway (6) empfangenen Speicherortsinformationen die zum elektrischen Haushaltsgerät (4), welches zum Fernsteuern angefragt worden ist, korrespondierenden Gerätesteuerinformationen von der Datenbank (71) zu erfassen, betriebsfähig ist, die erfassten Gerätesteuerinformationen zu interpretieren und auszuführen, und betriebsfähig ist, ein Steuersignal an das Heim-Gateway (6) zu übertragen, welches zu jedem gewünschten Betriebsdetail korrespondiert, und wobei
das Heim-Gateway (6) betriebsfähig ist, das empfangene Steuersignal dem zum Fernsteuern angefragten elektrischen Haushaltsgerät (4) zur Verfügung zu stellen.

3. Gerätesteuersystem nach Anspruch 1, wobei
die Datenbank (71) betriebsfähig ist, eine Vielzahl der Gerätesteuerinformationen für jedes der elektrischen Haushaltsgeräte (4) zu speichern, und wobei die Speicherortsinformationen betriebsfähig sind, zwei oder mehr der Vielzahl der Gerätesteuerinformationen zu bestimmen, wobei
das Heim-Gateway (6) betriebsfähig ist, in Erwiderung auf eine Anfrage vom mobilen Kommunikationsendgerät (2) zum Fernsteuern des elektrischen Haushaltsgeräts (4) die Speicherortsinformationen des elektrischen Haushaltsgeräts (4) an das mobile Kommunikationsendgerät (2) zu übertragen, wobei
das mobile Kommunikationsendgerät (2) betriebsfähig ist, auf Grundlage der vom Heim-Gateway (6) empfangenen Speicherortsinformationen wahlweise jede gewünschte Gerätesteuerinformation unter den zwei oder mehr der Vielzahl der Gerätesteuerinformationen, welche zum elektrischen Haushaltsgerät (4) korrespondieren, die zum Fernsteuern angefragt worden ist, von der Datenbank (71) zu erfassen, betriebsfähig ist, die erfassten Gerätesteuerinformationen zu interpretieren und auszuführen, und betriebsfähig ist, ein zu jedem gewünschten Betriebsdetail korrespondierendes Steuersignal an das Heim-Gateway (6) zu übertragen, und wobei
das Heim-Gateway (6) betriebsfähig ist, das empfange Steuersignal dem zum Fernsteuern angefragten elektrischen Haushaltsgerät (4) zur Verfügung zu stellen.

4. Gerätesteuersystem nach Anspruch 1, wobei
die Datenbank (71) betriebsfähig ist, einen einzelnen Teil der Gerätesteuerinformationen für jedes der elektrischen Haushaltsgeräte (4) zu speichern, und wobei die Steuerortsinformationen betriebsfähig sind, die Gerätesteuerinformationen eindeutig zu bestimmen, wobei
das Heim-Gateway (6) nach dem Verbinden mit dem elektrischen Haushaltsgerät (4) über das lokale Netzwerk (5) betriebsfähig ist, im Voraus die durch die Speicherortsinformationen des verbundenen elektrischen Haushaltsgeräts (4) bestimmten Gerätesteuerinformationen von der Datenbank (71) zu erfassen, wobei
das Heim-Gateway (6) betriebsfähig ist, in Erwiderung auf eine Anfrage vom mobilen Kommunikationsendgerät (2) zum Fernsteuern des elektrischen Haushaltsgeräts (4) auf Grundlage der Gerätesteuerinformationen einen Betriebsbildschirm an das mobile Kommunikationsendgerät (2) zu übertragen, wobei
das mobile Kommunikationsendgerät (2) betriebsfähig ist, unter Verwendung des vom Heim-Gateway (6) empfangenen Betriebsbildschirms einen Befehl an das Heim-Gateway (6) zu übertragen, welcher jedes gewünschte Betriebsdetail des zum Fernsteuern angefragten elektrischen Haushaltsgeräts (4) enthält, und wobei
das Heim-Gateway (6) betriebsfähig ist, die Gerätesteuerinformationen in Übereinstimmung mit dem empfangenen Befehl zu interpretieren und auszuführen, und betriebsfähig ist, ein zu den gewünschten Betriebsdetails korrespondierendes Steuersignal dem zum Fernsteuern angefragten elektrischen Haushaltsgerät (4) zur Verfügung zu stellen.

5. Gerätesteuersystem nach Anspruch 2, wobei
das Heim-Gateway (6) betriebsfähig ist, die Speicherortsinformationen zusammen mit einem für das elektrische Haushaltsgerät (4) vorbestimmten Gerätenamen zu verwalten, und betriebsfähig ist, in Erwiderung auf die Anfrage den Gerätenamen zusammen mit den Speicherortsinformationen an das mobile Kommunikationsendgerät (2) zu übertragen, und wobei das mobile Kommunikationsendgerät (2) betriebsfähig ist, das zum Fernsteuern angefragte elektrische Haushaltsgerät (4) durch Bezugnahme auf den vom Heim-Gateway (6) empfangenen Gerätenamen auszuwählen.

6. Gerätesteuersystem nach Anspruch 5, wobei
das Heim-Gateway (6) weiterhin betriebsfähig ist, eine einen Betrieb und eine Einstellung des elektrischen Haushaltsgeräts (4) betreffende Gerätebedingung zu verwalten, und betriebsfähig ist, in Erwiderung auf die Anfrage die Gerätebedingung zusammen mit den Speicherortsinformationen und dem Gerätenamen an das mobile Kommunikationsendgerät (2) zu übertragen, und wobei das mobile Kommunikationsendgerät (2) betriebsfähig ist, durch Bezugnahme auf die vom Heim-Gateway (6) empfangene Gerätebedingung zu bestimmen, ob die Betriebsdetails gültig sind.

7. Gerätesteuersystem nach Anspruch 1, wobei die durch das Heim-Gateway (6) kollektiv gesteuerten Speicherortsinformationen beliebig geändert werden können.

8. Gerätesteuerverfahren zum Fernsteuern eines beliebigen elektrischen Haushaltsgeräts (4) in einem Heimbereich (3) unter Verwendung eines mobilen Kommunikationsendgeräts (2) in einem System, wobei ein Netzwerk (1) eine Datenbank (71), welche zumindest einen Gerätesteuerinformationsteil speichert, der zum Definieren eine Signals zum direkten Steuern eines von verschiedenen Typen elektrischer Haushaltsgeräte (4) erforderlich ist; ein mit zumindest einem der elektrischen Haushaltsgeräte (4) verbundenes Heim-Gateway (6), welches betriebsfähig ist, über ein lokales Netzwerk (5) Informationen über einen Zugriff auf die Datenbank (71), welche die eigenen Gerätesteuerinformationen des elektrischen Haushaltsgeräts (4) speichert, als Speicherortsinformationen zu halten; und das mobile Kommunikationsendgerät (2) verbindet, wobei
das Heim-Gateway (6) nach dem Verbinden mit dem elektrischen Haushaltsgerät (4) über das lokale Netzwerk (5) die durch das damit verbundene elektrische Haushaltsgerät (4) gehaltenen Speicherortsinformationen erfasst und speichert, und wobei
das mobile Kommunikationsendgerät (2), unter Verwendung der durch das Heim-Gateway (6) verwalteten Speicherortsinformationen, das elektrische Haushaltsgerät (4) auf Grundlage der in der Datenbank (71) gespeicherten Gerätesteuerinformationen fernsteuert.

9. Gerätesteuerverfahren nach Anspruch 8, wobei die Datenbank (71) einen einzelnen Teil der Gerätesteuerinformationen für jedes der elektrischen Haushaltsgeräte (4) speichert, und wobei die Speicherortsinformationen die Gerätesteuerinformationen eindeutig bestimmen, und wobei
das Verfahren weiterhin die folgenden Schritte umfasst:
Übertragen der Speicherortsinformationen des elektrischen Haushaltsgeräts (4) an das mobile Kommunikationsendgerät (2) durch das Heim-Gateway (6) in Erwiderung auf eine Anfrage vom mobilen Kommunikationsendgerät (2) zum Fernsteuern des elektrischen Haushaltsgeräts (4);
Erfassen der Gerätesteuerinformationen, welche zum zum Fernsteuern angefragten elektrischen Haushaltsgerät (4) korrespondieren, von der Datenbank (71) durch das mobile Kommunikationsendgerät (2) auf Grundlage der vom Heim-Gateway (6) empfangenen Speicherortsinformationen;
Interpretieren und Ausführen der von der Datenbank (71) erfassten Gerätesteuerinformationen durch das mobile Kommunikationsendgerät (2), und Übertragen eines zu jedem gewünschten Betriebsdetail korrespondierenden Steuersignals an das Heim-Gateway (6); und
Zur Verfügung stellen des vom mobilen Kommunikationsendgerät (2) empfangenen Steuersignals an das zum Fernsteuern angefragte elektrische Haushaltsgerät (4) durch das Heim-Gateway (6).

10. Gerätesteuerverfahren nach Anspruch 8, wobei
die Datenbank (71) eine Vielzahl der Gerätesteuerinformationen für jedes der elektrischen Haushaltsgeräte (4) speichert, und wobei die Speicherortsinformationen zwei oder mehr der Vielzahl der Gerätesteuerinformationen bestimmen, und wobei
das Verfahren weiterhin die folgenden Schritte umfasst:
Übertragen der Speicherortsinformationen des elektrischen Haushaltsgeräts (4) an das mobile Kommunikationsendgerät (2) durch das Heim-Gateway (6) in Erwiderung auf eine Anfrage vom mobilen Kommunikationsgerät (2) zum Fernsteuern des elektrischen Haushaltsgeräts (4);
Wahlweises Erfassen durch das mobile Kommunikationsendgerät (2) jeder gewünschten Gerätesteuerinformation unter den zwei oder mehr der Vielzahl der Gerätesteuerinformationen, welche zum zum Fernsteuern angefragten elektrischen Haushaltsgerät (4) korrespondieren, von der Datenbank (71) auf Grundlage der vom Heim-Gateway (6) gelieferten Speicherortsinformationen;
Interpretieren und Ausführen der von der Datenbank (71) erfassten Gerätesteuerinformationen durch das mobile Kommunikationsendgerät (2), und Übertragen eines zu jedem gewünschten Betriebsdetail korrespondierenden Steuersignals an das Heim-Gateway (6); und
Zur Verfügung stellen des vom mobilen Kommunikationsendgerät (2) empfangenen Steuersignals an das zum Fernsteuern angefragte elektrische Haushaltsgerät (4).

11. Gerätesteuerverfahren nach Anspruch 8, wobei
die Datenbank (71) einen einzelnen Teil der Gerätesteuerinformationen für jedes der elektrischen Haushaltsgeräte (4) speichert, und wobei die Speicherortsinformationen die Gerätesteuerinformationen eindeutig bestimmen, und wobei
das Verfahren die folgenden Schritte umfasst:
Erfassen der durch die Speicherortsinformationen des verbundenen elektrischen Haushaltsgeräts (4) bestimmten Gerätesteuerinformationen durch das Heim-Gateway (6) im Voraus von der Datenbank (71), nachdem das Heim-Gateway (6) mit dem elektrischen Haushaltsgerät (4) über das lokale Netzwerk (5) verbunden ist;
Übertragen eines Betriebsbildschirms durch das Heim-Gateway (6) auf Grundlage der Gerätesteuerinformationen des elektrischen Haushaltsgeräts (4) an das mobile Kommunikationsendgerät (2) in Erwiderung auf eine Anfrage vom mobilen Kommunikationsendgerät (2), welches zum Fernsteuern des elektrischen Haushaltsgeräts (4) betriebsfähig ist;
Übertragen eines Befehls an das Heim-Gateway (6) durch das mobile Kommunikationsendgerät (2), welcher jedes gewünschte Betriebsdetail des zum Fernsteuern angefragten elektrischen Haushaltsgeräts (4) enthält, unter Verwendung des vom Heim-Gateway (6) empfangenen Betriebsbildschirms; und
Interpretieren und Ausführen der Gerätesteuerinformationen durch das Heim-Gateway (6) in Übereinstimmung mit dem vom mobilen Kommunikationsendgerät (2) empfangenen Befehl und zur Verfügung stellen eines zu den gewünschten Betriebsdetails korrespondierenden Steuersignals an das zum Fernsteuern angefragte elektrische Haushaltsgerät (4).

12. Gerätesteuerverfahren nach Anspruch 9, weiterhin umfassend die folgenden Schritte:
Übertragen eines für das elektrische Haushaltsgerät (4) vorbestimmten und zusammen mit den Speicherortsinformationen verwalteten Gerätenamens durch das Heim-Gateway (6) an das mobile Kommunikationsendgerät (2) zusammen mit den Speicherortsinformationen in Erwiderung auf die Anfrage; und
Auswählen des zum Fernsteuern angefragten elektrischen Haushaltsgeräts (4) durch Bezugnahme auf den vom Heim-Gateway (6) empfangenen Gerätenamen durch das mobile Kommunikationsendgerät (2).

13. Gerätesteuerverfahren nach Anspruch 12, weiterhin umfassend die folgenden Schritte:
Übertragen einer weiterhin **dadurch** verwalteten Gerätebedingung, welche einen Betrieb und eine Einstellung des elektrischen Haushaltsgeräts (4) betrifft, zusammen mit den Speicherortsinformationen und dem Gerätenamen durch das Heim-Gateway (6) in Erwiderung auf die Anfrage; und
Bestimmen durch das mobile Kommunikationsendgerät (2) durch Bezugnahme auf die vom Heim-Gateway (6) empfangene Gerätebedingung, ob die Betriebsdetails gültig sind.

14. Gerätesteuerverfahren nach Anspruch 8, wobei die durch das Heim-Gateway (6) verwalteten Speicherortsinformationen beliebig geändert werden können.

## Revendications

1. Système de commande d'appareil destiné à la commande à distance d'un appareil électrique domestique arbitraire (4) dans une zone locale (3) en ayant recours à un terminal de communications mobiles (2), le système comprenant:
une base de données (71) stockant au moins une information de commande d'appareil nécessaire pour définir un signal dans le but de commander directement un type quelconque parmi plusieurs types d'appareils électriques domestiques (4);
au moins un appareil électrique domestique (4) fonctionnel pour retenir, en tant qu'information concernant l'emplacement de stockage, une information concernant l'accès à la base de données (71) qui stocke l'information de commande d'appareil propre de l'appareil électrique domestique (4);
une passerelle domestique (6) se connectant avec l'appareil électrique domestique (4) par l'intermédiaire d'un réseau local (5), et fonctionnelle pour commander de manière collective l'information concernant l'emplacement de stockage retenue par l'appareil électrique domestique (4) qui lui connecté;
un terminal de communications mobiles (2) fonctionnel pour commander à distance l'appareil électrique domestique (4) sur la base de l'information de commande d'appareil stockée dans la base de données (71) en utilisant l'information concernant l'emplacement de stockage commandée de manière collective par la passerelle domestique (6); et
un réseau (1) faisant la connexion entre la base de données (71), la passerelle domestique (6), et le terminal de communications mobiles (2).

2. Système de commande d'appareil selon la revendication 1, dans lequel
la base de données (71) est fonctionnelle pour stocker une seule de ladite information de commande d'appareil pour chacun des appareils électriques domestiques (4), et l'information concernant l'emplacement de stockage spécifie de manière unique l'information de commande d'appareil,
en réponse à une demande provenant du terminal de communications mobiles (2) pour commander à distance l'appareil électrique domestique (4), la passerelle domestique (6) est fonctionnelle pour transmettre l'information concernant l'emplacement de stockage de l'appareil électrique domestique (4) au terminal de communications mobiles (2),
sur la base de l'information concernant l'emplacement de stockage reçue de la passerelle domestique (6), le terminal de communications mobiles (2) est fonctionnel pour acquérir depuis la base de données (71) l'information de commande d'appareil correspondant à l'appareil électrique domestique (4) demandé pour la commande à distance, est fonctionnel pour interpréter et exécuter l'information de commande d'appareil acquise, et est fonctionnel pour transmettre un signal de commande correspondant à tous détails opérationnels voulus à la passerelle domestique (6), et
la passerelle domestique (6) est fonctionnelle pour fournir le signal de commande reçu à l'appareil électrique domestique (4) demandé pour la commande à distance.

3. Système de commande d'appareil selon la revendication 1, dans lequel
la base de données (71) est fonctionnelle pour stocker une pluralité de ladite information de commande d'appareil pour chacun des appareils électriques domestiques (4), et l'information concernant l'emplacement de stockage est fonctionnelle pour spécifier deux ou plus parmi la pluralité de ladite information de commande d'appareil,
en réponse à une demande provenant du terminal de communications mobiles (2) pour commander à distance l'appareil électrique domestique (4), la passerelle domestique (6) est fonctionnelle pour transmettre l'information concernant l'emplacement de stockage de l'appareil électrique domestique (4) au terminal de communications mobiles (2),
sur la base de l'information concernant l'emplacement de stockage reçue de la passerelle domestique (6), le terminal de communications mobiles (2) est fonctionnel pour faire sélectivement l'acquisition, à partir de la base de données (71), d'une information voulue quelconque des informations de commande d'appareils parmi les deux ou plus de la pluralité de ladite information de commande d'appareil correspondant à l'appareil électrique domestique (4) demandé pour la commande à distance, est fonctionnel pour interpréter et exécuter l'information de commande d'appareil acquise, et est fonctionnel pour transmettre un signal de commande correspondant à tous détails opérationnels voulus à la passerelle domestique (6), et
la passerelle domestique (6) est fonctionnelle pour fournir le signal de commande reçu à l'appareil électrique domestique (4) demandé pour la commande à distance.

4. Système de commande d'appareil selon la revendication 1, dans lequel
la base de données (71) est fonctionnelle pour stocker une seule information desdites informations de commande d'appareils pour chacun des appareils électriques domestiques (4), et l'information concernant l'emplacement de stockage est fonctionnelle pour spécifier de manière unique l'information de commande d'appareil,
la passerelle domestique (6), après connexion avec l'appareil électrique domestique (4) à travers le réseau local (5), est fonctionnelle pour faire l'acquisition, en avance, à partir de la base de données (71), de l'information de commande d'appareil spécifiée par l'information concernant l'emplacement de stockage de l'appareil électrique domestique (4) connecté,
en réponse à une demande provenant du terminal de communications mobiles (2) pour commander à distance l'appareil électrique domestique (4), la passerelle domestique (6) est fonctionnelle pour transmettre un écran d'exploitation sur la base de l'information de commande d'appareil au terminal de communications mobiles (2),
en utilisant l'écran d'exploitation reçu de la passerelle domestique (6), le terminal de communications mobiles (2) est fonctionnel pour transmettre une instruction à la passerelle domestique (6) incluant tous détails opérationnels voulus de l'appareil électrique domestique (4) demandé pour la commande à distance, et
la passerelle domestique (6) est fonctionnelle pour interpréter et exécuter l'information de commande d'appareil en accord avec l'instruction reçue, et est fonctionnelle pour fournir un signal de commande correspondant aux détails opérationnels voulus à l'appareil électrique domestique (4) demandé pour la commande à distance.

5. Système de commande d'appareil selon la revendication 2, dans lequel
la passerelle domestique (6) est fonctionnelle pour gérer l'information concernant l'emplacement de stockage ainsi qu'un nom d'appareil prédéterminé pour l'appareil électrique domestique (4), et en réponse à la demande, elle est fonctionnelle pour transmettre le nom de l'appareil ainsi que l'information concernant l'emplacement de stockage au terminal de communications mobiles (2), et dans lequel le terminal de communications mobiles (2) est fonctionnel pour sélectionner l'appareil électrique domestique (4) demandé pour la commande à distance en se rapportant au nom de l'appareil reçu de la passerelle domestique (6).

6. Système de commande d'appareil selon la revendication 5, dans lequel
la passerelle domestique (6) est en outre fonctionnelle pour gérer une condition concernant l'appareil se rapportant à un fonctionnement et un réglage de l'appareil électrique domestique (4), et en réponse à la demande, elle est fonctionnelle pour transmettre la condition concernant l'appareil ainsi que l'information concernant l'emplacement de stockage et le nom de l'appareil au terminal de communications mobiles (2), et dans lequel le terminal de communications mobiles (2) est fonctionnel pour déterminer si les détails opérationnels sont valides en se rapportant à la condition concernant l'appareil reçue de la passerelle domestique (6).

7. Système de commande d'appareil selon la revendication 1, dans lequel l'information concernant l'emplacement de stockage commandée de manière collective par la passerelle domestique (6) peut être modifiée de manière arbitraire.

8. Procédé de commande d'appareil pour commander à distance un appareil électrique domestique arbitraire (4) dans une zone locale (3) en ayant recours à un terminal de communications mobiles (2) dans un système dans lequel un réseau (1) relie une base de données (71) stockant au moins une information de commande d'appareil nécessaire pour définir un signal pour commander directement un type quelconque parmi plusieurs types d'appareils électriques domestiques (4); une passerelle domestique (6) se connectant avec au moins l'un des appareils électriques domestiques (4) fonctionnelle pour retenir, en tant qu'information concernant l'emplacement de stockage, une information concernant l'accès à la base de données (71) qui stocke l'information de commande d'appareil propre de l'appareil électrique domestique (4) par l'intermédiaire d'un réseau local (5); et le terminal de communications mobiles (2), dans lequel
la passerelle domestique (6), après connexion avec l'appareil électrique domestique (4) à travers le réseau local (5), fait l'acquisition et gère l'information concernant l'emplacement de stockage retenue par l'appareil électrique domestique (4) qui lui est connecté, et
en utilisant l'information concernant l'emplacement de stockage gérée par la passerelle domestique (6), le terminal de communications mobiles (2) commande à distance l'appareil électrique domestique (4) sur la base de l'information de commande d'appareil stockée dans la base de données (71).

9. Procédé de commande d'appareil selon la revendication 8, dans lequel la base de données (71) stocke un seule parmi lesdites informations de commande d'appareils pour chacun des appareils électriques domestiques (4), et l'information concernant l'emplacement de stockage spécifie de manière unique l'information de commande d'appareil, et
le procédé comprend en outre les étapes de:
transmettre, par le biais de la passerelle domestique (6), l'information concernant l'emplacement de stockage de l'appareil électrique domestique (4) au terminal de communications mobiles (2) en réponse à une demande provenant du terminal de communications mobiles (2) pour commander à distance l'appareil électrique domestique (4);
faire l'acquisition, à partir de la base de données (71), par le biais du terminal de communications mobiles (2), de l'information de commande d'appareil correspondant à l'appareil électrique domestique (4) demandé pour la commande à distance sur la base de l'information concernant l'emplacement de stockage reçue de la passerelle domestique (6);
interpréter et exécuter, par le terminal de communications mobiles (2), l'information de commande d'appareil acquise depuis la base de données (71), et transmettre un signal de commande correspondant à tous détails opérationnels voulus à la passerelle domestique (6); et
fournir, par la passerelle domestique (6), le signal de commande reçu du terminal de communications mobiles (2) à l'appareil électrique domestique (4) demandé pour la commande à distance.

10. Procédé de commande d'appareil selon la revendication 8, dans lequel
la base de données (71) stocke une pluralité desdites informations de commande d'appareils pour chacun des appareils électriques domestiques (4), et l'information concernant l'emplacement de stockage spécifie deux ou davantage de la pluralité desdites informations de commande d'appareils, et
le procédé comprend en outre les étapes de:
transmettre, par la passerelle domestique (6), l'information concernant l'emplacement de stockage de l'appareil électrique domestique (4) au terminal de communications mobiles (2) en réponse à une demande provenant du terminal de communications mobiles (2) pour commander à distance l'appareil électrique domestique (4);
faire l'acquisition, de manière sélective, par le terminal de communications mobiles (2), à partir de la base de données (71), d'une information de commande d'appareil voulue quelconque parmi les deux ou plus de la pluralité desdites informations de commande d'appareils correspondant à l'appareil électrique domestique (4) demandé pour la commande à distance sur la base de l'information concernant l'emplacement de stockage pourvue depuis la passerelle domestique (6);
interpréter et exécuter, par le terminal de communications mobiles (2), l'information de commande d'appareil acquise depuis la base de données (71), et transmettre un signal de commande correspondant à tous détails opérationnels voulus à la passerelle domestique (6); et
fournir, par la passerelle domestique (6), le signal de commande reçu du terminal de communications mobiles (2) à l'appareil électrique domestique (4) demandé pour la commande à distance.

11. Procédé de commande d'appareil selon la revendication 8, dans lequel
la base de données (71) stocke une seule information desdites informations de commande d'appareils pour chacun des appareils électriques domestiques (4), et l'information concernant l'emplacement de stockage spécifie de manière unique l'information de commande d'appareil, et
le procédé comprenant les étapes de:
faire l'acquisition depuis la base de données (71), en avance, par le biais de la passerelle domestique (6), après connexion de la passerelle domestique (6) avec l'appareil électrique domestique (4) à travers le réseau local (5), de l'information de commande d'appareil spécifiée par l'information concernant l'emplacement de stockage de l'appareil électrique domestique connecté (4);
transmettre, par la passerelle domestique (6), en réponse à une demande provenant du terminal de communications mobiles (2) fonctionnel pour commander à distance l'appareil électrique domestique (4), un écran d'exploitation sur la base de l'information de commande d'appareil de l'appareil électrique domestique (4) au terminal de communications mobiles (2);
transmettre une instruction à la passerelle domestique (6), par le terminal de communications mobiles (2), incluant tous détails opérationnels voulus de l'appareil électrique domestique (4) demandé pour la commande à distance en utilisant un écran d'exploitation reçu de la passerelle domestique (6); et
interpréter et exécuter, par la passerelle domestique (6), l'information de commande d'appareil en accord avec l'instruction reçue du terminal de communications mobiles (2), et fournir un signal de commande correspondant aux détails opérationnels voulus à l'appareil électrique domestique (4) demandé pour la commande à distance.

12. Procédé de commande d'appareil selon la revendication 9, comprenant en outre les étapes de:
en réponse à la demande, transmettre, par la passerelle domestique (6), un nom d'appareil prédéterminé pour l'appareil électrique domestique (4) et géré en même temps que l'information concernant l'emplacement de stockage au terminal de communications mobiles (2) ainsi que l'information concernant l'emplacement de stockage; et
sélectionner, par le terminal de communication mobiles (2), l'appareil électrique domestique (4) demandé pour la commande à distance en se rapportant au nom de l'appareil reçu de la passerelle domestique (6).

13. Procédé de commande d'appareil selon la revendication 12, comprenant en outre les étapes de:
en réponse à la demande, transmettre, par la passerelle domestique (6), une condition concernant l'appareil gérée en outre se rapportant ainsi à un fonctionnement et un réglage de l'appareil électrique domestique (4) en même temps que l'information concernant l'emplacement de stockage et le nom de l'appareil; et
déterminer, par le terminal de communications mobiles (2), si les détails opérationnels sont valides en se rapportant à la condition concernant l'appareil reçue de la passerelle domestique (6).

14. Procédé de commande d'appareil selon la revendication 8, dans lequel l'information concernant l'emplacement de stockage gérée par la passerelle domestique (6) peut être modifiée de manière arbitraire.
